# EUROPEAN PATENT SPECIFICATION

(11) **EP 4 090 072 B1**
(45) Date of publication and mention of the grant of the patent: **17.12.2025**
(21) Application number: 21753379.3
(22) Date of filing: 04.02.2021
(51) Int. Cl.: H04W 36/00, H04W 36/08, H04W 72/23

(54) **CELL HANDOVER METHODS BASED ON CORESET OR RELATED INFORMATION OF A FIRST TRP AND CORRESPONDING DEVICES AND COMPUTER-READABLE STORAGE MEDIUM.**
ZELLENÜBERGABEVERFAHREN BASIERT AUF CORESET ODER ZUGEHÖRIGEN INFORMATIONEN EINES ERSTEN TRP UND ENTSPRECHENDEN GERÄTEN UND EINEM COMPUTERLESBAREN SPEICHERMEDIUM.
MÉTHODES DE TRANSFERT INTERCELLULAIRE BASÉES SUR UN CORESET OU DES INFORMATIONS RELATIVES À UN PREMIER TRP ET LES DISPOSITIFS CORRESPONDANTS, ET SUPPORT DE STOCKAGE LISIBLE PAR ORDINATEUR.

(30) Priority: 12.02.2020 CN 202010089400
(43) Date of publication of application: 16.11.2022
(73) Proprietor: Vivo Mobile Communication Co., Ltd., Dongguan, Guangdong 523863 (CN)
(72) Inventor: YANG, Ang, Dongguan, Guangdong 523863 (CN); SUN, Peng, Dongguan, Guangdong 523863 (CN)
(74) Representative: Pennacchio, Salvatore Giovanni
(86) International application number: PCT/CN2021/075279
(87) International publication number: WO 2021/160020

(56) References cited:
- CN-A- 109 076 412
- CN-A- 110 149 702
- CN-A- 110 463 264
- CN-A- 110 463 264
- US-A1- 2017 135 001
- US-A1- 2018 279 182
- US-A1- 2018 279 193
- US-A1- 2018 376 511
- US-A1- 2023 098 488
- VIVO: "Clarification on CORESET configuration", vol. RAN WG2, no. Busan, Korea; 20180521 - 20180525, 20 May 2018 (2018-05-20), XP051444070, Retrieved from the Internet <URL:http://www.3gpp.org/ftp/Meetings%5F3GPP%5FSYNC/RAN2/Docs/> [retrieved on 20180520]
- HUAWEI, HISILICON: "Considerations on mobility management in NTN", 3GPP DRAFT; R2-1818248 CONSIDERATION ON MOBILITY MANAGEMENT IN NTN, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Spokane, US; 20181112 - 20181116, 2 November 2018 (2018-11-02), Mobile Competence Centre ; 650, route des Lucioles ; F-06921 Sophia-Antipolis Cedex ; France, XP051482121

## Description

Cell handover methods based on CORESET or related information of a first TRP and corresponding devices and computer-readable storage medium.

### TECHNICAL FIELD

Embodiments of the present application relate to the field of communications, and in particular, to cell handover methods based on CORESET or related information of a first TRP and corresponding devices and computer-readable storage medium.

### BACKGROUND

Cell handover is mostly performed by means of assistance by a terminal device. For example, a network device selects, according to a measurement report reported by a terminal device, a target cell for handover.

A process of cell handover in the related art is as follows: 1. A source cell instructs handover and transmits a handover request to a target cell; 2. The target cell performs admission control, provides a radio resource control (Radio Resource Control, RRC) configuration, and sends the RRC configuration to the source cell as a part of the handover admission; 3. The source cell sends an RRC reconfiguration message including a handover command to the terminal device; and 4. The terminal device performs RRC connection to the target cell and replies that the handover is completed.

It can be seen that during cell handover, the network device needs to send an RRC reconfiguration message to explicitly instruct the terminal device to perform handover, which cause a long delay and is inflexible.

CN110463264A discloses that the terminal hands over to the target cell based on the random access indication signaling including an identifier of the target cell.

US2018/376511A1 discloses that the UE hands over from a serving cell to a target cell based on the first CORESET configuration obtained through the handover command.

R2-1807724 discloses that the handover or PScell change is performed based on the configured CORESET.

US2018/279182A1 discloses that the handover is performed based on an L2 handover command including a target cell identifier and a pre-assigned preamble.

US2017/135001A1 discloses that the terminal executes a random access procedure with the target base station depending on the pre-RACH command.

### SUMMARY

The purpose of the embodiments of the present application is to provide a cell handover method and a device, so as to solve the problems of a long delay and inflexibility in the cell handover process in the related art.

A first aspect provides a cell handover method which is defined in claim 1.

A second aspect provides a cell handover method which is defined in claim 9.

A third aspect provides a terminal device which is defined in claim 11.

A fourth aspect provides a network device which is defined in claim 13.

A fifth aspect provides a computer-readable storage medium which is defined in claim 15.

Further advantageous embodiments of the present disclosure are indicated in the dependent claims.

### BRIEF DESCRIPTION OF DRAWINGS

The accompanying drawings illustrated herein are provided to further understand the present application and form a part of the present application. The exemplary embodiments of the present application and the descriptions thereof are used to explain the present application and do not constitute an improper limitation on the present application.
FIG. 1 is a schematic flowchart of a cell handover method according to an embodiment of the present application;
FIG. 2 is a schematic flowchart of a cell handover method according to another embodiment of the present application;
FIG. 3 is a schematic structural diagram of a terminal device according to an embodiment of the present application;
FIG. 4 is a schematic structural diagram of a network device according to an embodiment of the present application;
FIG. 5 is a schematic structural diagram of a terminal device according to another embodiment of the present application; and
FIG. 6 is a schematic structural diagram of a network device according to another embodiment of the present application.

### DETAILED DESCRIPTION OF EMBODIMENTS

To make the objectives, technical solutions, and advantages of the present application clearer, the following clearly and completely describes the technical solutions of the present application with reference to the specific embodiments of the present application and the corresponding accompanying drawings. The term "and/or" in the embodiments of this specification indicates at least one of the former item and the latter item.

It should be understood that the technical solutions in the embodiments of the present application may be applied to various communication systems, such as a long term evolution (Long Term Evolution, LTE) system, a LTE frequency division duplex (Frequency Division Duplex, FDD) system, LTE time division duplex (Time Division Duplex, TDD), a universal mobile telecommunications system (Universal Mobile Telecommunication System, UMTS) or a worldwide interoperability for microwave access (Worldwide Interoperability for Microwave Access, WiMAX) communication system, a 5G system, or a new radio (New Radio, NR) system, or a subsequent evolved communication system.

In the embodiments of the present application, a terminal device may include, but is not limited to a mobile station (Mobile Station, MS), a mobile terminal (Mobile Terminal), a mobile telephone (Mobile Telephone), user equipment (User Equipment, UE), a handset (handset), portable equipment (portable equipment), a vehicle (vehicle), and the like. The terminal device may communicate with one or more core networks by using a radio access network (Radio Access Network, RAN). For example, the terminal device may be a mobile telephone (or referred to as a "cellular" telephone), or a computer having a wireless communication function; or the terminal device may be a portable, pocket-sized, handheld, computer built-in, or vehicle-mounted mobile apparatus.

In the embodiments of the present application, a network device is an apparatus that is deployed in a radio access network and that is configured to provide a wireless communication function for the terminal device. The network device may be a base station, and the base station may include various types of macro base stations, micro base stations, relay stations, or access points. In systems using different radio access technologies, names of devices having a base station function may be different. For example, in an LTE network, the device is referred to as an evolved NodeB (Evolved NodeB, eNB or eNodeB), and in a 3rd Generation (3rd Generation, 3G) network, the device is referred to as a NodeB (NodeB) or a network device in the subsequent evolved communications system. However, the terms do not constitute a limitation.

In the related art, during cell handover, the network device needs to send an RRC reconfiguration message to explicitly instruct the terminal device to perform handover, which has a long delay and is inflexible. In order to solve the above technical problem, the embodiments of the present application provide multiple manners to implicitly instruct the terminal device to perform cell handover.

A control resource set (Control Resource Set, CORESET) is configuration information of a physical downlink control channel (Physical Downlink Control Channel, PDCCH) of the terminal device. If a specific CORESET is associated with another cell, this is a good cell handover command. In addition to the CORESET, the embodiments of the present application also provide other effective cell handover solutions, for example, related information of a transmission and reception point (Transmission and Reception Point, TRP) is associated with another cell, a reference signal (Reference signal, RS) as beam reference information is associated with another cell, and a beam indication is associated with another cell.

Before introducing the various embodiments of the present application in detail, the definition of "cell handover" mentioned in the embodiments of the present application will be explained first. Handing over to a target cell or a target TRP mentioned in various embodiments of the present application may include one of the following 1) to 7).
1) An anchor node (Anchor Node) is handed over to the target cell.
2) An anchor node remains unchanged and in a case that there are multiple TRPs, a cell associated with a TRP of a non-anchor node is handed over.

In various embodiments of this specification, a TRP identifier (TRP ID) may be a control resource set resource pool index (CORESETPoolIndex), and multiple TRPs mean that the value of CORESETPoolIndex is greater than 0.

3) Configuration information of the target cell is used.

In this example, the configuration information of the target cell includes higher layer configuration information and physical layer configuration information. a) The higher layer configuration information includes at least one of the following: cell group configuration (CellGroupConfig); special cell configuration (SpCellConfig); reconfiguration with synchronization (Reconfiguration WithSync); serving cell common configuration (ServingCellConfigCommon); and serving cell configuration (ServingCellConfig).

b) The physical layer configuration information includes at least one of the following: transmission configuration indication (Transmission Configuration Indication, TCI) information; quasi co-location (Quasi Co-Location, QCL) information; a path loss reference reference signal (Path Loss reference RS, PL RS); a random access channel (Random Access Channel, RACH) resource; and scrambling information.
4) CORESET#0 belongs to the target cell.
5) A PDCCH belongs to the target cell.
6) A special cell (SpCell, including a primary cell and a primary secondary cell) is handed over to the target cell.
7) A network node identifier (for example, a cell ID) or network node related information associated with a resource pool index of a control resource set (CORESETPoolIndex) is changed. Specifically, for example, the cell ID associated with CORESETPoolIndex or related information of the cell ID changes.

It should be noted that, the network node mentioned in each embodiment of the present application may be a cell or a TRP.

The cell handover method provided by the present application will be described in detail below in multiple embodiments.

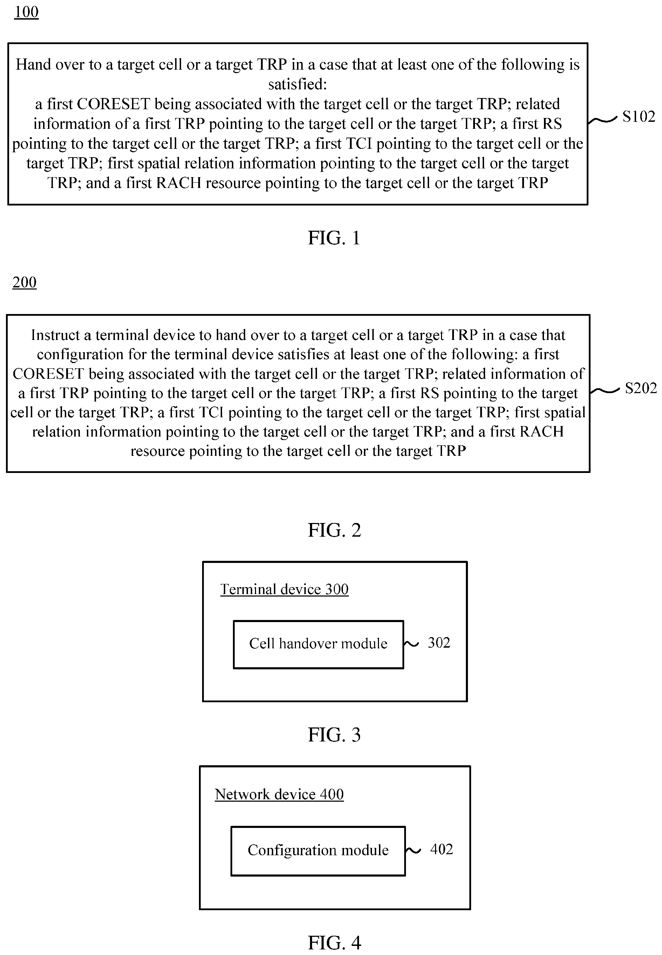

As shown in FIG. 1, an embodiment of the present application provides a cell handover method 100. The method can be performed by a terminal device, that is, the method can be performed by software or hardware installed in the terminal device. The method includes the following steps.

S102: Hand over to a target cell or a target TRP based on at least one of the following configured by a network device for the terminal device: 1) a first CORESET being associated with the target cell or the target TRP; and 2) related information of a first TRP pointing to the target cell or the target TRP.

Optionally, at least one of the following is further configured by the network device for the terminal device: 3) a first RS pointing to the target cell or the target TRP; 4) a first TCI pointing to the target cell or the target TRP; 5) first spatial relation information pointing to the target cell or the target TRP; and 6) a first random access channel (Random Access Channel, RACH) resource pointing to the target cell or the target TRP.

Optionally, before S102, the terminal device may further perform radio resource management (Radio Resource Management, RRM) measurement, radio link management (Radio Link Management, RLM) measurement, beam measurement, or the like according to current cell configuration, and after completing related measurement, the terminal device may perform RRM reporting, RLM reporting, or beam reporting.

According to measurement content reported by the terminal device, the network device may configure/update/activate at least one of the foregoing for the terminal device, and instruct the terminal device to perform cell handover. In this way, the terminal device can hand over from a source cell to the target cell or the target TRP based on at least one of the above-mentioned information. That is, the terminal device performs cell handover based on at least one of the above-mentioned information. Specifically, the terminal device can perform RRC connection to the target cell or the target TRP, and reply that the handover is completed.

It can be seen that the configuration of at least one of the above conditions is related to the target cell or the target TRP. In this way, the terminal device can directly use the above configuration when performing cell handover, which reduces the cell handover delay.

The embodiments of the present application provide various manners to implicitly instruct the terminal device to perform cell handover, and the network device does not need to explicitly send RRC reconfiguration signaling, which improves the flexibility of the system and reduces the cell handover delay.

The multiple conditions mentioned in the embodiment 100 will be described in detail below in terms of various embodiments.
(1)
   The first CORESET is associated with the target cell or the target TRP mentioned in 1) of the embodiment 100.

Optionally, the first CORESET includes at least one of the following: a CORESET#0; a CORESET with the smallest index; a CORESET with the largest index; a CORESET configured by the network device; and a CORESET reported by the terminal device.

That the first CORESET is associated with the target cell or the target TRP includes at least one of the following a) to d).
a) Target information of the first CORESET indicates the target cell or the target TRP.

Optionally, the target information includes at least one of the following of the first CORESET: a TCI; QCL information in a TCI; an RS included in a TCI, which is specifically an RS in QCL information included in a TCI, where subsequent embodiments are similar; QCL information of an RS included in a TCI; and an RS associated with QCL information of an RS included in a TCI.

Optionally, that the target information indicates the target cell or the target TRP includes at least one of the following 1 to 3.
1. The configuration information of the target information includes a network node identifier or network node related information of the target cell. Specifically, for example, the configuration information of the target information includes PCI or PCI related information or a cell ID or cell ID related information of another cell (that is, the target cell, where the following is similar thereto).
2. The configuration information of the target information includes a network node identifier or network node related information of the target TRP. Specifically, for example, the configuration information of the target information includes a TRP ID or TRP ID related information of another TRP (that is, the target TRP, where the following is similar thereto). It is mentioned in various embodiments of this specification that the TRP ID information may be CORESETPoolIndex.
3. The configuration information of the target information includes target signaling or a target information element (IE), and the target signaling or the target information element indicates the target cell or the target TRP.

In example a), the network configures or activates or updates related information through RRC signaling, or a medium access control control element (Medium Access Control-Control Element, MAC-CE), or downlink control information (Downlink Control Information, DCI), so that the target information of the first CORESET indicates the target cell or the target TRP.

b) The first CORESET indicates the target cell or the target TRP.

Configuration information of the first CORESET indicates a target network node identifier or target network node related information; where the target network node includes the target cell or the target TRP.

Specifically, for example, PCI or PCI related information or a cell ID or cell ID related information of another cell; and a TRP ID or TRP ID related information of another TRP are configured/activated/updated in the configuration information of the first CORESET.

In example b), the network configures or activates or updates related information through RRC signaling, or a MAC-CE, or DCI, so that the first CORESET indicates the target cell or the target TRP.

c) Scrambling information (scrambling sequence) used by the first CORESET indicates the target cell or the target TRP.

Optionally, the scrambling information may be used to scramble a PDCCH (pdcch-DMRS-ScramblingID).

In example c), the network configures or activates or updates related information through RRC signaling, or a MAC-CE, or DCI, so that the scrambling information used by the first CORESET indicates the target cell or the target TRP.

d) related configuration information of a TRP associated with the first CORESET indicates the target cell or the target TRP.

Related configuration information of a TRP to which the first CORESET belongs indicates a target network node identifier or target network node related information; where the target network node includes the target cell or the target TRP.

Specifically, for example, PCI or PCI related information or a cell ID or cell ID related information of another cell; and a TRP ID or TRP ID related information of another TRP are configured/activated/updated in the related configuration information of the TRP (an ID of the TRP may be CORESETPoolIndex) to which the first CORESET belongs.

In example d), the network configures or activates or updates related information through RRC signaling, or a MAC-CE, or DCI, so that the related configuration information of the TRP associated with the first CORESET indicates the target cell or the target TRP.

(2)
The related information of the first TRP points to the target cell or the target TRP mentioned in 2) of the embodiment 100.

Optionally, the first TRP includes at least one of the following: a TRP with an index 0; a TRP with the smallest index; a TRP with the largest index; a TRP including CORESET#0; a TRP including a CORESET with the smallest index; a TRP including a CORESET with the largest index; a TRP indicated by the network device; and a TRP reported by the terminal device.

That the related information of the first TRP points to the target cell includes at least one of the following a) and b).
a) related configuration information of the first TRP includes a target network node identifier or target network node related information.

Specifically, for example, a related configuration of the first TRP includes PCI or PCI related information or a cell ID or cell ID related information of the target cell.

The related configuration information of the first TRP includes at least one of the following and/or configuration information associated with at least one of the following: PDCCH configuration information, namely, PDCCH-config; and a control resource set resource pool index, namely, CORESETPoolIndex.

In example a), the network configures or activates or updates the related information through RRC signaling, or a MAC-CE, or DCI, so that the related configuration information of the first TRP includes a target network node identifier or target network node related information.

b) related information of a cell to which the first TRP belongs includes a target network node identifier or target network node related information; where the target network node includes the target cell or the target TRP.

Specifically, for example, related information of a cell to which the first TRP belongs includes PCI or PCI related information or a cell ID or cell ID related information (for example, ServingCellConfigCommon) of the target cell.

The related information of the cell in this example includes at least one of the following and/or configuration information associated with at least one of the following: cell group configuration information (CellGroupConfig); special cell configuration information (SpCellConfig); reconfiguration with synchronization information (ReconfigurationWithSync); serving cell configuration information (ServingCellConfig); and serving cell common configuration information (ServingCellConfigCommon).

In example b), the network configures or activates or updates related information through RRC signaling, or a MAC-CE, or DCI, so that the related information of the cell to which the first TRP belongs includes a target network node identifier or target network node related information.

(3)
The first RS points to the target cell or the target TRP mentioned in 3) of the embodiment 100.

Optionally, the first RS satisfies at least one of the following: an index of a resource set to which the first RS belongs being 0 (for example, the ID of the resource set), where in this example, the resource set with the index 0 includes the first RS; an index of a resource set to which the first RS belongs being the smallest; an index of a resource set to which the first RS belongs being the largest; an index of the first RS being 0; an index of the first RS being the smallest; an index of the first RS being the largest; the first RS being a path loss reference reference signal (Path Loss RS, PL RS); the first RS being indicated by the network device; and the first RS being reported by the terminal device.

Specifically, for example, the ID of the resource set of the first RS is 0 or the lowest ID or the highest ID; the resource ID of the first RS is 0 or the lowest ID or the highest ID; and the first RS is the PL RS.

Optionally, when the first RS is a path loss reference reference signal, the path loss reference reference signal satisfies at least one of the following: an index of a reference signal resource to which the path loss reference reference signal belongs being 0, where the index of the reference signal resource is used for power control indication, that is, an index in power control, and in this example, the reference signal resource with the index 0 includes the path loss reference reference signal; an index of a reference signal resource to which the path loss reference reference signal belongs being the smallest; an index of a reference signal resource to which the path loss reference reference signal belongs being the largest; a related index (that is, an index of the first RS, where the following is similar thereto) being 0; the related index being the smallest; and the related index being the largest.

Specifically, for example, an RS resource ID of the PL RS or a related ID of the PL RS is 0 or the lowest ID or the highest ID.

Optionally, when the first RS is a path loss reference reference signal, the path loss reference reference signal is used for at least one of the following: a PUCCH; a physical uplink shared channel (Physical Uplink Shared Channel, PUSCH); a sounding reference signal (Sounding Reference Signal, SRS); and a physical random access channel (Physical Random Access Channel, PRACH).

Optionally, that the first RS points to the target cell or the target TRP includes: configuration information of at least one of the following including a target network node identifier or target network node related information: the first RS; QCL information of the first RS; and an RS associated with QCL information of the first RS; where the target network node includes the target cell or the target TRP.

Specifically, for example, the configuration information of the first RS, the QCL information of the first RS, or the RS associated with the QCL information of the first RS includes PCI or PCI related information or a cell ID or cell ID related information of another cell; and a TRP ID or TRP ID related information of another TRP.

In this example, the network configures or activates or updates related information through RRC signaling, or a MAC-CE, or DCI, so that the first RS points to the target cell or the target TRP.

(4)
The first TCI points to the target cell or the target TRP mentioned in 4) of the embodiment 100.

Optionally, the first TCI includes at least one of the following: a TCI with the smallest index configured by RRC; a TCI with the largest index configured by RRC; a TCI configured by RRC; a TCI with the smallest index configured by RRC and activated by a MAC CE; a TCI with the largest index configured by RRC and activated by a MAC CE; a TCI configured by RRC and activated by a MAC CE; a TCI indicated by the network device; and a TCI reported by the terminal device.

Optionally, the first TCI is used for beam indication of at least one of the following: a PDCCH; a PDSCH; a synchronization signal/PBCH block (SS/PBCH Block, SSB); a channel state information reference signal (Channel State Information-Reference Signal, CSI-RS); a PUSCH; an SRS; a PUCCH; and a PRACH.

Optionally, that the first TCI points to the target cell or the target TRP includes: configuration information of at least one of the following including a target network node identifier or target network node related information: the first TCI; QCL information in the first TCI; an RS included in the first TCI; QCL information of an RS included in the first TCI; and an RS associated with QCL information of an RS included in the first TCI; where the target network node includes the target cell or the target TRP.

The RS included in the first TCI is the RS in the QCL information in the first TCI.

Specifically, for example, the configuration information of the first TCI, or the QCL in the first TCI, or the RS included in the first TCI, or the QCL of the RS included in the first TCI, or the RS associated with the QCL information of the RS included in the first TCI includes PCI or PCI related information or a cell ID or cell ID related information of another cell; and a TRP ID or TRP ID related information of another TRP.

In this example, the network configures or activates or updates related information through RRC signaling, or a MAC-CE, or DCI, so that the first TCI points to the target cell or the target TRP.

(5)
The first spatial relation information points to the target cell or the target TRP mentioned in 5) of the embodiment 100.

Optionally, the first spatial relation information includes at least one of the following: PUCCH spatial relation information; PUCCH information used for beam indication; SRS spatial relation information; and SRS information used for beam indication.

Optionally, the PUCCH satisfies at least one of the following: an index of a PUCCH resource set to which the PUCCH belongs being 0; an index of a PUCCH resource set (PUCCH-ResourceSetId) to which the PUCCH belongs being the smallest; an index of a PUCCH resource set to which the PUCCH belongs being the largest; a PUCCH resource set to which the PUCCH belongs being indicated by the network device; a PUCCH resource set to which the PUCCH belongs being reported by the terminal device; a PUCCH resource (PUCCH-ResourceId) index being 0; a PUCCH resource index being the smallest; a PUCCH resource index being the largest; a PUCCH resource index being indicated by the network device; and a PUCCH resource index being reported by the terminal device.

Specifically, for example, for PUCCH spatial relation info or information used for beam indication, the PUCCH is at least one of the following: 1) PUCCH-ResourceSetId being 0, or the lowest ID, or the highest ID, a PUCCH-ResourceSet indicated by the network device, or a PUCCH-ResourceSet indicated by the terminal device to the network device; 2) PUCCH-ResourceId being 0, or the lowest ID, or the highest ID, a PUCCH-Resource indicated by the network device, or a PUCCH-Resource indicated by the terminal device to the network device; and 3) a PUCCH indicated by the network device, or a PUCCH indicated by the terminal device to the network device.

Optionally, the SRS satisfies at least one of the following: an index of an SRS resource set to which the SRS belongs being 0; an index of an SRS resource set to which the SRS belongs being the smallest; an index of an SRS resource set to which the SRS belongs being the largest; an SRS resource set to which the SRS belongs being indicated by the network device; an SRS resource set to which the SRS belongs being reported by the terminal device; an SRS resource index being 0; an SRS resource index being the smallest; an SRS resource index being the largest; an SRS resource index being indicated by the network device; and an SRS resource index being reported by the terminal device.

Specifically, for example, for SRS spatial relation info or information used for beam indication, the SRS is at least one of the following: 1) SRS-ResourceSetId being 0, or the lowest ID, or the highest ID, an SRS-ResourceSet indicated by the network device, or an SRS-ResourceSet indicated by the terminal device to the network device; 2) SRS-ResourceId being 0, or the lowest ID, or the highest ID, an SRS-Resource indicated by the network device, or an SRS-Resource indicated by the terminal device to the network device; and 3) an SRS indicated by the network device, or an SRS indicated by the terminal device to the network device.

Optionally, that the first spatial relation information points to the target cell or the target TRP includes: configuration information of at least one of the following including a target network node identifier or target network node related information: the first spatial relation information; an RS in the first spatial relation information; QCL information of the RS in the first spatial relation information; and an RS associated with QCL information of the RS in the first spatial relation information; where the target network node includes the target cell or the target TRP.

Specifically, for example, configuration information of the first Spatial relation info, or the RS in the first Spatial relation info, or the QCL of the RS in the first Spatial relation info, or the RS associated with the QCL information of the RS in the first Spatial relation info includes PCI or PCI related information or a cell ID or cell ID related information of another cell; and a TRP ID or TRP ID related information of another TRP.

In this example, the network configures or activates or updates related information through RRC signaling, or a MAC-CE, or DCI, so that the first spatial relation information points to the target cell or the target TRP.

(6)
The first RACH resource points to the target cell or the target TRP mentioned in 6) of the embodiment 100.

Optionally, at least one of the following and/or configuration information of at least one of the following includes a target network node identifier or target network node related information: the SSB associated with the first RACH resource; QCL information of the SSB associated with the first RACH resource; and an RS associated with the QCL information of the SSB associated with the first RACH resource; where the target network node includes the target cell or the target TRP.

Specifically, for example, configuration information of the SSB associated with the first RACH resource, or the QCL of the SSB associated with the first RACH resource, or the RS associated with the QCL information of the SSB associated with the first RACH resource includes PCI or PCI related information or a cell ID or cell ID related information of another cell; and a TRP ID or TRP ID related information of another TRP.

In this example, the network configures or activates or updates related information through RRC signaling, or a MAC-CE, or DCI, so that the first RACH resource points to the target cell or the target TRP.

The cell handover method according to the embodiments of the present application is described in detail above with reference to FIG. 1. A cell handover method according to another embodiment of the present application is described in detail below with reference to FIG. 2. It may be understood that the interaction between the network device and the terminal device described on the network device side is the same as that described on the terminal device side in the method shown in FIG. 1. To avoid repetition, related descriptions are appropriately omitted.

FIG. 2 is a schematic flowchart of an implementation of a cell handover method according to an embodiment of the present application, where the method can be applied to the network device side. As shown in FIG. 2, the method 200 includes the following steps:

S202: Instruct a terminal device to hand over to a target cell or a target TRP by configuring for the terminal device at least one of the following: a first CORESET being associated with the target cell or the target TRP; and related information of a first TRP pointing to the target cell or the target TRP.

Optionally, at least one of the following is further configured by the network device for the terminal device: a first RS pointing to the target cell or the target TRP; a first TCI pointing to the target cell or the target TRP; first spatial relation information pointing to the target cell or the target TRP; and a first RACH resource pointing to the target cell or the target TRP.

The embodiments of the present application provide various manners to implicitly instruct the terminal device to perform cell handover, and the network device does not need to explicitly send RRC reconfiguration signaling, which improves the flexibility of the system and reduces the cell handover delay.

Optionally, as an embodiment, the first CORESET includes at least one of the following: a CORESET#0; a CORESET with the smallest index; a CORESET with the largest index; a CORESET configured by the network device; and a CORESET reported by the terminal device.

As an embodiment, that the first CORESET is associated with the target cell or the target TRP includes at least one of the following: target information of the first CORESET indicating the target cell or the target TRP; the first CORESET indicating the target cell or the target TRP; scrambling information used by the first CORESET indicating the target cell or the target TRP; and related configuration information of a TRP associated with the first CORESET indicating the target cell or the target TRP.

Optionally, as an embodiment, the target information includes at least one of the following of the first CORESET: a TCI; quasi co-location QCL information in a TCI; an RS included in a TCI; QCL information of an RS included in a TCI; and an RS associated with QCL information of an RS included in a TCI.

Optionally, as an embodiment, that the target information indicates the target cell or the target TRP includes at least one of the following: configuration information of the target information including a network node identifier or network node related information of the target cell; configuration information of the target information including a network node identifier or network node related information of the target TRP; and configuration information of the target information including target signaling or a target information element, and the target signaling or the target information element indicating the target cell or the target TRP.

As an embodiment, that the first CORESET indicates the target cell or the target TRP includes: configuration information of the first CORESET indicating a target network node identifier or target network node related information; where the target network node includes the target cell or the target TRP.

Optionally, as an embodiment, the scrambling information is used to scramble a physical downlink control channel PDCCH.

As an embodiment, that the related configuration information of the TRP associated with the first CORESET points to the target cell or the target TRP includes: related configuration information of a TRP to which the first CORESET belongs indicating a target network node identifier or target network node related information; where the target network node includes the target cell or the target TRP.

Optionally, as an embodiment, the first TRP includes at least one of the following: a TRP with an index 0; a TRP with the smallest index; a TRP with the largest index; a TRP including CORESET#0; a TRP including a CORESET with the smallest index; a TRP including a CORESET with the largest index; a TRP indicated by the network device; and a TRP reported by the terminal device.

As an embodiment, that the related information of the first TRP points to the target cell includes at least one of the following: the related configuration information of the first TRP including a target network node identifier or target network node related information; and related information of a cell to which the first TRP belongs including a target network node identifier or target network node related information; where the target network node includes the target cell or the target TRP.

As an embodiment, the related configuration information of the first TRP includes at least one of the following and/or configuration information associated with at least one of the following: PDCCH configuration information; and a control resource set resource pool index.

As an embodiment, the related information of the cell in this example includes at least one of the following and/or configuration information associated with at least one of the following: cell group configuration information; special cell configuration information; reconfiguration with synchronization information; serving cell configuration information; and serving cell common configuration information.

Optionally, as an embodiment, the first RS satisfies at least one of the following: an index of a resource set to which the first RS belongs being 0; an index of a resource set to which the first RS belongs being the smallest; an index of a resource set to which the first RS belongs being the largest; an index of the first RS being 0; an index of the first RS being the smallest; an index of the first RS being the largest; the first RS being a path loss reference reference signal; the first RS being indicated by the network device; and the first RS being reported by the terminal device.

Optionally, as an embodiment, the path loss reference reference signal satisfies at least one of the following: an index of a reference signal resource to which the path loss reference reference signal belongs being 0; an index of a reference signal resource to which the path loss reference reference signal belongs being the smallest; an index of a reference signal resource to which the path loss reference reference signal belongs being the largest; a related index being 0; the related index being the smallest; and the related index being the largest.

Optionally, as an embodiment, the path loss reference signal is used for at least one of the following: a PUCCH; a PUSCH; an SRS; and a PRACH.

Optionally, as an embodiment, that the first RS points to the target cell or the target TRP includes: configuration information of at least one of the following including a target network node identifier or target network node related information: the first RS; QCL information of the first RS; and an RS associated with QCL information of the first RS; where the target network node includes the target cell or the target TRP.

Optionally, as an embodiment, the first TCI includes at least one of the following: a TCI with the smallest index configured by radio resource control RRC; a TCI with the largest index configured by RRC; a TCI configured by RRC; a TCI with the smallest index configured by RRC and activated by a medium access control MAC control element CE; a TCI with the largest index configured by RRC and activated by a MAC CE; a TCI configured by RRC and activated by a MAC CE; a TCI indicated by the network device; and a TCI reported by the terminal device.

Optionally, as an embodiment, the first TCI is used for beam indication of at least one of the following: a PDCCH; a PDSCH; an SSB; a CSI-RS; a PUSCH; an SRS; a PUCCH; and a PRACH.

Optionally, as an embodiment, that the first TCI points to the target cell or the target TRP includes: configuration information of at least one of the following including a target network node identifier or target network node related information: the first TCI; QCL information in the first TCI; an RS included in the first TCI; QCL information of an RS included in the first TCI; and an RS associated with QCL information of an RS included in the first TCI; where the target network node includes the target cell or the target TRP.

Optionally, as an embodiment, the first spatial relation information includes at least one of the following: PUCCH spatial relation information; PUCCH information used for beam indication; SRS spatial relation information; and SRS information used for beam indication.

Optionally, as an embodiment, the PUCCH satisfies at least one of the following: an index of a PUCCH resource set to which the PUCCH belongs being 0; an index of a PUCCH resource set to which the PUCCH belongs being the smallest; an index of a PUCCH resource set to which the PUCCH belongs being the largest; a PUCCH resource set to which the PUCCH belongs being indicated by the network device; a PUCCH resource set to which the PUCCH belongs being reported by the terminal device; a PUCCH resource index being 0; a PUCCH resource index being the smallest; a PUCCH resource index being the largest; a PUCCH resource index being indicated by the network device; and a PUCCH resource index being reported by the terminal device.

Optionally, as an embodiment, the SRS satisfies at least one of the following: an index of an SRS resource set to which the SRS belongs being 0; an index of an SRS resource set to which the SRS belongs being the smallest; an index of an SRS resource set to which the SRS belongs being the largest; an SRS resource set to which the SRS belongs being indicated by the network device; an SRS resource set to which the SRS belongs being reported by the terminal device; an SRS resource index being 0; an SRS resource index being the smallest; an SRS resource index being the largest; an SRS resource index being indicated by the network device; and an SRS resource index being reported by the terminal device.

Optionally, as an embodiment, that the first spatial relation information points to the target cell or the target TRP includes: configuration information of at least one of the following including a target network node identifier or target network node related information: the first spatial relation information; an RS in the first spatial relation information; QCL information of the RS in the first spatial relation information; and an RS associated with QCL information of the RS in the first spatial relation information; where the target network node includes the target cell or the target TRP.

Optionally, as an embodiment, that the first RACH resource points to the target cell or the target TRP includes: at least one of the following and/or configuration information of at least one of the following including a target network node identifier or target network node related information: the SSB associated with the first RACH resource; QCL information of the SSB associated with the first RACH resource; and an RS associated with the QCL information of the SSB associated with the first RACH resource; where the target network node includes the target cell or the target TRP.

Optionally, as an embodiment, the handing over to the target cell or the target TRP includes at least one of the following: an anchor node being handed over to the target cell; an anchor node remaining unchanged and in a case that there are multiple TRPs, a cell associated with a TRP of a non-anchor node being handed over; configuration information of the target cell being used; CORESET#0 belonging to the target cell; a PDCCH belonging to the target cell; a special cell being handed over to the target cell; and a network node identifier or network node related information associated with a resource pool index of a control resource set being changed.

Optionally, as an embodiment, the configuration information of the target cell includes at least one of the following: cell group configuration; special cell configuration; reconfiguration with synchronization; serving cell common configuration; serving cell configuration; a TCI; QCL information; a path loss reference reference signal; a RACH resource; and scrambling information.

The cell handover method according to the embodiments of the present application is described in detail above with reference to FIG. 1 and FIG. 2. The terminal device according to the embodiments of the present application will be described in detail below with reference to FIG. 3.

FIG. 3 is a schematic structural diagram of a terminal device according to an embodiment of the present application. As shown in FIG. 3, a terminal device 300 includes: a cell handover module 302, configured to hand over to a target cell or a target TRP based on at least one of the following configured by a network device for the terminal device: a first CORESET being associated with the target cell or the target TRP; and related information of a first TRP pointing to the target cell or the target TRP.

Optionally, at least one of the following is further configured by the network device for the terminal device: a first RS pointing to the target cell or the target TRP; a first TCI pointing to the target cell or the target TRP; first spatial relation information pointing to the target cell or the target TRP; and a first RACH resource pointing to the target cell or the target TRP.

The embodiments of the present application provide various manners to implicitly instruct the terminal device to perform cell handover, and the network device does not need to explicitly send RRC reconfiguration signaling, which improves the flexibility of the system and reduces the cell handover delay.

Optionally, as an embodiment, the first CORESET includes at least one of the following: a CORESET#0; a CORESET with the smallest index; a CORESET with the largest index; a CORESET configured by the network device; and a CORESET reported by the terminal device.

As an embodiment, that the first CORESET is associated with the target cell or the target TRP includes at least one of the following: target information of the first CORESET indicating the target cell or the target TRP; the first CORESET indicating the target cell or the target TRP; scrambling information used by the first CORESET indicating the target cell or the target TRP; and related configuration information of a TRP associated with the first CORESET indicating the target cell or the target TRP.

Optionally, as an embodiment, the target information includes at least one of the following of the first CORESET: a TCI; quasi co-location QCL information in a TCI; an RS included in a TCI; QCL information of an RS included in a TCI; and an RS associated with QCL information of an RS included in a TCI.

Optionally, as an embodiment, that the target information indicates the target cell or the target TRP includes at least one of the following: configuration information of the target information including a network node identifier or network node related information of the target cell; configuration information of the target information including a network node identifier or network node related information of the target TRP; and configuration information of the target information including target signaling or a target information element, and the target signaling or the target information element indicating the target cell or the target TRP.

As an embodiment, that the first CORESET indicates the target cell or the target TRP includes: configuration information of the first CORESET indicating a target network node identifier or target network node related information; where the target network node includes the target cell or the target TRP.

Optionally, as an embodiment, the scrambling information is used to scramble a physical downlink control channel PDCCH.

As an embodiment, that the related configuration information of the TRP associated with the first CORESET points to the target cell or the target TRP includes: related configuration information of a TRP to which the first CORESET belongs indicating a target network node identifier or target network node related information; where the target network node includes the target cell or the target TRP.

Optionally, as an embodiment, the first TRP includes at least one of the following: a TRP with an index 0; a TRP with the smallest index; a TRP with the largest index; a TRP including CORESET#0; a TRP including a CORESET with the smallest index; a TRP including a CORESET with the largest index; a TRP indicated by the network device; and a TRP reported by the terminal device.

As an embodiment, that the related information of the first TRP points to the target cell includes at least one of the following: the related configuration information of the first TRP including a target network node identifier or target network node related information; and related information of a cell to which the first TRP belongs including a target network node identifier or target network node related information; where the target network node includes the target cell or the target TRP.

As an embodiment, the related configuration information of the first TRP includes at least one of the following and/or configuration information associated with at least one of the following: PDCCH configuration information; and a control resource set resource pool index.

As an embodiment, the related information of the cell in this example includes at least one of the following and/or configuration information associated with at least one of the following: cell group configuration information; special cell configuration information; reconfiguration with synchronization information; serving cell configuration information; and serving cell common configuration information.

Optionally, as an embodiment, the first RS satisfies at least one of the following: an index of a resource set to which the first RS belongs being 0; an index of a resource set to which the first RS belongs being the smallest; an index of a resource set to which the first RS belongs being the largest; an index of the first RS being 0; an index of the first RS being the smallest; an index of the first RS being the largest; the first RS being a path loss reference reference signal; the first RS being indicated by the network device; and the first RS being reported by the terminal device.

Optionally, as an embodiment, the path loss reference reference signal satisfies at least one of the following: an index of a reference signal resource to which the path loss reference reference signal belongs being 0; an index of a reference signal resource to which the path loss reference reference signal belongs being the smallest; an index of a reference signal resource to which the path loss reference reference signal belongs being the largest; a related index being 0; the related index being the smallest; and the related index being the largest.

Optionally, as an embodiment, the path loss reference reference signal is used for at least one of the following: a PUCCH; a PUSCH; an SRS; and a PRACH.

Optionally, as an embodiment, that the first RS points to the target cell or the target TRP includes: configuration information of at least one of the following including a target network node identifier or target network node related information: the first RS; QCL information of the first RS; and an RS associated with QCL information of the first RS; where the target network node includes the target cell or the target TRP.

Optionally, as an embodiment, the first TCI includes at least one of the following: a TCI with the smallest index configured by radio resource control RRC; a TCI with the largest index configured by RRC; a TCI configured by RRC; a TCI with the smallest index configured by RRC and activated by a medium access control MAC control element CE; a TCI with the largest index configured by RRC and activated by a MAC CE; a TCI configured by RRC and activated by a MAC CE; a TCI indicated by the network device; and a TCI reported by the terminal device.

Optionally, as an embodiment, the first TCI is used for beam indication of at least one of the following: a PDCCH; a PDSCH; an SSB; a CSI-RS; a PUSCH; an SRS; a PUCCH; and a PRACH.

Optionally, as an embodiment, that the first TCI points to the target cell or the target TRP includes: configuration information of at least one of the following including a target network node identifier or target network node related information: the first TCI; QCL information in the first TCI; an RS included in the first TCI; QCL information of an RS included in the first TCI; and an RS associated with QCL information of an RS included in the first TCI; where the target network node includes the target cell or the target TRP.

Optionally, as an embodiment, the first spatial relation information includes at least one of the following: PUCCH spatial relation information; PUCCH information used for beam indication; SRS spatial relation information; and SRS information used for beam indication.

Optionally, as an embodiment, the PUCCH satisfies at least one of the following: an index of a PUCCH resource set to which the PUCCH belongs being 0; an index of a PUCCH resource set to which the PUCCH belongs being the smallest; an index of a PUCCH resource set to which the PUCCH belongs being the largest; a PUCCH resource set to which the PUCCH belongs being indicated by the network device; a PUCCH resource set to which the PUCCH belongs being reported by the terminal device; a PUCCH resource index being 0; a PUCCH resource index being the smallest; a PUCCH resource index being the largest; a PUCCH resource index being indicated by the network device; and a PUCCH resource index being reported by the terminal device.

Optionally, as an embodiment, the SRS satisfies at least one of the following: an index of an SRS resource set to which the SRS belongs being 0; an index of an SRS resource set to which the SRS belongs being the smallest; an index of an SRS resource set to which the SRS belongs being the largest; an SRS resource set to which the SRS belongs being indicated by the network device; an SRS resource set to which the SRS belongs being reported by the terminal device; an SRS resource index being 0; an SRS resource index being the smallest; an SRS resource index being the largest; an SRS resource index being indicated by the network device; and an SRS resource index being reported by the terminal device.

Optionally, as an embodiment, that the first spatial relation information points to the target cell or the target TRP includes: configuration information of at least one of the following including a target network node identifier or target network node related information: the first spatial relation information; an RS in the first spatial relation information; QCL information of the RS in the first spatial relation information; and an RS associated with QCL information of the RS in the first spatial relation information; where the target network node includes the target cell or the target TRP.

Optionally, as an embodiment, that the first RACH resource points to the target cell or the target TRP includes: at least one of the following and/or configuration information of at least one of the following including a target network node identifier or target network node related information: the SSB associated with the first RACH resource; QCL information of the SSB associated with the first RACH resource; and an RS associated with the QCL information of the SSB associated with the first RACH resource; where the target network node includes the target cell or the target TRP.

Optionally, as an embodiment, the handing over to the target cell or the target TRP includes at least one of the following: an anchor node being handed over to the target cell; an anchor node remaining unchanged and in a case that there are multiple TRPs, a cell associated with a TRP of a non-anchor node being handed over; configuration information of the target cell being used; CORESET#0 belonging to the target cell; a PDCCH belonging to the target cell; a special cell being handed over to the target cell; and a network node identifier or network node related information associated with a resource pool index of a control resource set being changed.

Optionally, as an embodiment, the configuration information of the target cell includes at least one of the following: cell group configuration; special cell configuration; reconfiguration with synchronization; serving cell common configuration; serving cell configuration; a TCI; QCL information; a path loss reference reference signal; a RACH resource; and scrambling information.

For the terminal device 300 according to the embodiments of the present application, refer to the flow corresponding to the method 100 according to the embodiments of the present application. Furthermore, each unit/module of the terminal device 300 and the foregoing other operations and/or functions are used to implement the corresponding flow of the method 100, can achieve the same or equivalent technical effect, and will no longer be described here for the purpose of brevity.

FIG. 4 is a schematic structural diagram of a network device according to an embodiment of the present application. As shown in FIG. 4, a network device 400 includes: a configuration module 402, configured to instruct a terminal device to hand over to a target cell or a target TRP by configuring for the terminal device at least one of the following: a first CORESET being associated with the target cell or the target TRP; and related information of a first TRP pointing to the target cell or the target TRP.

Optionally, at least one of the following is further configured by the network device for the terminal device: a first RS pointing to the target cell or the target TRP; a first TCI pointing to the target cell or the target TRP; first spatial relation information pointing to the target cell or the target TRP; and a first RACH resource pointing to the target cell or the target TRP.

The embodiments of the present application provide various manners to implicitly instruct the terminal device to perform cell handover, and the network device does not need to explicitly send RRC reconfiguration signaling, which improves the flexibility of the system and reduces the cell handover delay.

Optionally, as an embodiment, the first CORESET includes at least one of the following: a CORESET#0; a CORESET with the smallest index; a CORESET with the largest index; a CORESET configured by the network device; and a CORESET reported by the terminal device.

As an embodiment, that the first CORESET is associated with the target cell or the target TRP includes at least one of the following: target information of the first CORESET indicating the target cell or the target TRP; the first CORESET indicating the target cell or the target TRP; scrambling information used by the first CORESET indicating the target cell or the target TRP; and related configuration information of a TRP associated with the first CORESET indicating the target cell or the target TRP.

Optionally, as an embodiment, the target information includes at least one of the following of the first CORESET: a TCI; QCL information in a TCI; an RS included in a TCI; QCL information of an RS included in a TCI; and an RS associated with QCL information of an RS included in a TCI.

Optionally, as an embodiment, that the target information indicates the target cell or the target TRP includes at least one of the following: configuration information of the target information including a network node identifier or network node related information of the target cell; configuration information of the target information including a network node identifier or network node related information of the target TRP; and configuration information of the target information including target signaling or a target information element, and the target signaling or the target information element indicating the target cell or the target TRP.

As an embodiment, that the first CORESET indicates the target cell or the target TRP includes: configuration information of the first CORESET indicating a target network node identifier or target network node related information; where the target network node includes the target cell or the target TRP.

Optionally, as an embodiment, the scrambling information is used to scramble a physical downlink control channel PDCCH.

As an embodiment, that the related configuration information of the TRP associated with the first CORESET points to the target cell or the target TRP includes: related configuration information of a TRP to which the first CORESET belongs indicating a target network node identifier or target network node related information; where the target network node includes the target cell or the target TRP.

Optionally, as an embodiment, the first TRP includes at least one of the following: a TRP with an index 0; a TRP with the smallest index; a TRP with the largest index; a TRP including CORESET#0; a TRP including a CORESET with the smallest index; a TRP including a CORESET with the largest index; a TRP indicated by the network device; and a TRP reported by the terminal device.

As an embodiment, that the related information of the first TRP points to the target cell includes at least one of the following: the related configuration information of the first TRP including a target network node identifier or target network node related information; and related information of a cell to which the first TRP belongs including a target network node identifier or target network node related information; where the target network node includes the target cell or the target TRP.

As an embodiment, the related configuration information of the first TRP includes at least one of the following and/or configuration information associated with at least one of the following: PDCCH configuration information; and a control resource set resource pool index.

As an embodiment, the related information of the cell in this example includes at least one of the following and/or configuration information associated with at least one of the following: cell group configuration information; special cell configuration information; reconfiguration with synchronization information; serving cell configuration information; and serving cell common configuration information.

Optionally, as an embodiment, the first RS satisfies at least one of the following: an index of a resource set to which the first RS belongs being 0; an index of a resource set to which the first RS belongs being the smallest; an index of a resource set to which the first RS belongs being the largest; an index of the first RS being 0; an index of the first RS being the smallest; an index of the first RS being the largest; the first RS being a path loss reference reference signal; the first RS being indicated by the network device; and the first RS being reported by the terminal device.

Optionally, as an embodiment, the path loss reference reference signal satisfies at least one of the following: an index of a reference signal resource to which the path loss reference reference signal belongs being 0; an index of a reference signal resource to which the path loss reference reference signal belongs being the smallest; an index of a reference signal resource to which the path loss reference reference signal belongs being the largest; a related index being 0; the related index being the smallest; and the related index being the largest.

Optionally, as an embodiment, the path loss reference reference signal is used for at least one of the following: a PUCCH; a PUSCH; an SRS; and a PRACH.

Optionally, as an embodiment, that the first RS points to the target cell or the target TRP includes: configuration information of at least one of the following including a target network node identifier or target network node related information: the first RS; QCL information of the first RS; and an RS associated with QCL information of the first RS; where the target network node includes the target cell or the target TRP.

Optionally, as an embodiment, the first TCI includes at least one of the following: a TCI with the smallest index configured by RRC; a TCI with the largest index configured by RRC; a TCI configured by RRC; a TCI with the smallest index configured by RRC and activated by a MAC CE; a TCI with the largest index configured by RRC and activated by a MAC CE; a TCI configured by RRC and activated by a MAC CE; a TCI indicated by the network device; and a TCI reported by the terminal device.

Optionally, as an embodiment, the first TCI is used for beam indication of at least one of the following: a PDCCH; a PDSCH; an SSB; a CSI-RS; a PUSCH; an SRS; a PUCCH; and a PRACH.

Optionally, as an embodiment, that the first TCI points to the target cell or the target TRP includes: configuration information of at least one of the following including a target network node identifier or target network node related information: the first TCI; QCL information in the first TCI; an RS included in the first TCI; QCL information of an RS included in the first TCI; and an RS associated with QCL information of an RS included in the first TCI; where the target network node includes the target cell or the target TRP.

Optionally, as an embodiment, the first spatial relation information includes at least one of the following: PUCCH spatial relation information; PUCCH information used for beam indication; SRS spatial relation information; and SRS information used for beam indication.

Optionally, as an embodiment, the PUCCH satisfies at least one of the following: an index of a PUCCH resource set to which the PUCCH belongs being 0; an index of a PUCCH resource set to which the PUCCH belongs being the smallest; an index of a PUCCH resource set to which the PUCCH belongs being the largest; a PUCCH resource set to which the PUCCH belongs being indicated by the network device; a PUCCH resource set to which the PUCCH belongs being reported by the terminal device; a PUCCH resource index being 0; a PUCCH resource index being the smallest; a PUCCH resource index being the largest; a PUCCH resource index being indicated by the network device; and a PUCCH resource index being reported by the terminal device.

Optionally, as an embodiment, the SRS satisfies at least one of the following: an index of an SRS resource set to which the SRS belongs being 0; an index of an SRS resource set to which the SRS belongs being the smallest; an index of an SRS resource set to which the SRS belongs being the largest; an SRS resource set to which the SRS belongs being indicated by the network device; an SRS resource set to which the SRS belongs being reported by the terminal device; an SRS resource index being 0; an SRS resource index being the smallest; an SRS resource index being the largest; an SRS resource index being indicated by the network device; and an SRS resource index being reported by the terminal device.

Optionally, as an embodiment, that the first spatial relation information points to the target cell or the target TRP includes: configuration information of at least one of the following including a target network node identifier or target network node related information: the first spatial relation information; an RS in the first spatial relation information; QCL information of the RS in the first spatial relation information; and an RS associated with QCL information of the RS in the first spatial relation information; where the target network node includes the target cell or the target TRP.

Optionally, as an embodiment, that the first RACH resource points to the target cell or the target TRP includes: at least one of the following and/or configuration information of at least one of the following including a target network node identifier or target network node related information: the SSB associated with the first RACH resource; QCL information of the SSB associated with the first RACH resource; and an RS associated with the QCL information of the SSB associated with the first RACH resource; where the target network node includes the target cell or the target TRP.

Optionally, as an embodiment, the handing over to the target cell or the target TRP includes at least one of the following: an anchor node being handed over to the target cell; an anchor node remaining unchanged and in a case that there are multiple TRPs, a cell associated with a TRP of a non-anchor node being handed over; configuration information of the target cell being used; CORESET#0 belonging to the target cell; a PDCCH belonging to the target cell; a special cell being handed over to the target cell; and a network node identifier or network node related information associated with a resource pool index of a control resource set being changed.

Optionally, as an embodiment, the configuration information of the target cell includes at least one of the following: cell group configuration; special cell configuration; reconfiguration with synchronization; serving cell common configuration; serving cell configuration; a TCI; QCL information; a path loss reference reference signal; a RACH resource; and scrambling information.

For the terminal device 400 according to the embodiments of the present application, refer to the procedure corresponding to the method 200 according to the embodiments of the present application. Furthermore, each unit/module of the network device 400 and the foregoing other operations and/or functions are used to implement the corresponding procedure of the method 200, can achieve the same or equivalent technical effect, and will no longer be described here for the purpose of brevity.

The embodiments in this specification are described in a progressive manner. Each embodiment usually focuses on a difference from another embodiment. For a same or similar part of the embodiments, refer to each other. The device embodiment is described simply because the device embodiment is basically similar to the method embodiment. For related details, refer to partial description of the method embodiment.

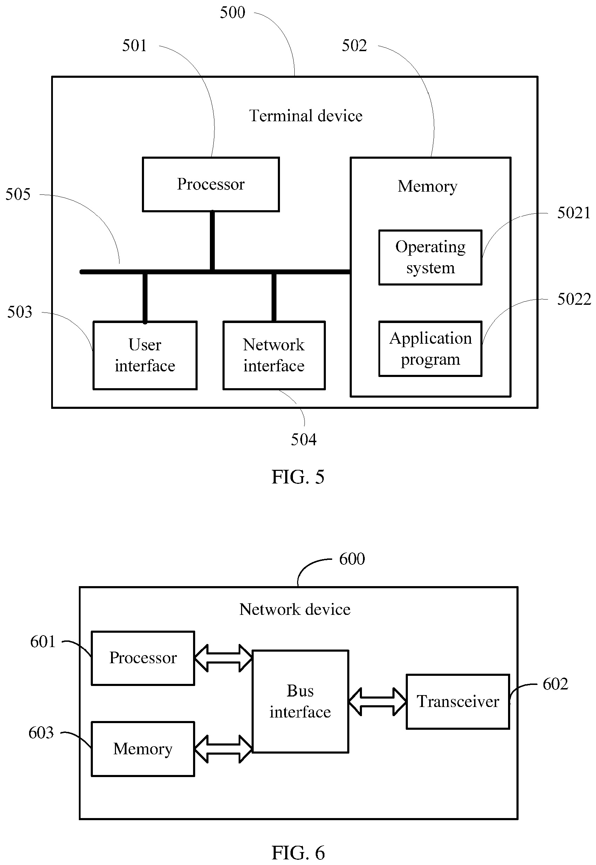

FIG. 5 is a block diagram of a terminal device according to another embodiment of the present application. As shown in FIG. 5, the terminal device 500 includes: at least one processor 501, a memory 502, at least one network interface 504, and a user interface 503. The components in the terminal device 500 are coupled together through a bus system 505. It may be understood that the bus system 505 is configured to implement connection and communication between these components. In addition to a data bus, the bus system 505 further includes a power bus, a control bus, and a status signal bus. However, for clear description, various buses are marked as the bus system 505 in FIG. 5.

The user interface 503 may include a display, a keyboard, a clicking device (for example: a mouse and a trackball (trackball)), a touch panel or a touchscreen.

It can be understood that the memory 502 in this embodiment of the present application may be a volatile memory or a nonvolatile memory, or may include both a volatile memory and a nonvolatile memory. The nonvolatile memory may be a read-only memory (Read-only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), which is used as an external cache. Through example but not limitative description, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DRRAM). The memory 502 in the system and the method that are described in the embodiments of the present application is to include but is not limited to these memories and a memory of any other proper type.

In some implementation manners, the memory 502 stores the following element, an executable module or a data structure, or a subset thereof, or an extension set thereof: an operating system 5021 and an application program 5022.

The operating system 5021 includes various system programs, such as a framework layer, a kernel layer, and a drive layer, and is configured to implement various basic services and process hardware-based tasks. The application program 5022 includes various application programs, such as a media player (Media Player) and a browser (Browser), and is configured to implement various application services. A program for implementing the method according to this embodiment of the present application may be included in the application program 5022.

In this embodiment of the present application, the terminal device 500 further includes a computer program that is stored in the memory 502 and that can run on the processor 501, and when the computer program is executed by the processor 501, the steps of the method 100 are implemented.

The method according to the foregoing embodiments of the present application may be applied to the processor 501, or may be implemented by the processor 501. The processor 501 may be an integrated circuit chip, and has a signal processing capability. In an implementation process, the steps in the foregoing methods may be completed by using an integrated logic circuit of hardware in the processor 501 or an instruction in a form of software. The processor 501 may be a general purpose processor, a digital signal processor (Digital Signal Processor, DSP), an application specific integrated circuit (Application Specific Integrated Circuit, ASIC), a field programmable gate array (Field Programmable Gate Array, FPGA), another programmable logic device, a discrete gate, a transistor logic device, or a discrete hardware component. The processor may implement or perform the methods, the steps, and logical block diagrams that are disclosed in the embodiments of the present application. The general purpose processor may be a microprocessor, or the processor may be any conventional processor or the like. Steps of the methods disclosed with reference to the embodiments of the present application may be directly executed and accomplished through a hardware decoding processor, or may be executed and accomplished by using a combination of hardware and software modules in the decoding processor. The software module may be located in a computer-readable storage medium that is mature in the art, such as a random access memory, a flash memory, a read-only memory, a programmable read-only memory, an electrically erasable programmable memory, or a register. The computer-readable storage medium is located in the memory 502. The processor 501 reads information in the memory 502 and completes the steps of the foregoing methods in combination with the hardware of the processor 501. Specifically, the computer-readable storage medium stores a computer program, and when the computer program is executed by the processor 501, the steps of the foregoing method embodiment 100 are performed.

It can be understood that the embodiments described in the embodiments of the present application may be implemented by hardware, software, firmware, middleware, microcode, or a combination thereof. For implementation with hardware, the processing unit can be implemented in one or more application specific integrated circuits (Application Specific Integrated Circuits, ASIC), a digital signal processor (Digital Signal Processing, DSP), a digital signal processing device (DSP Device, DSPD), a programmable logic device (Programmable Logic Device, PLD), a field-programmable gate array (Field-Programmable Gate Arrays, PFGA), general processors, controllers, micro-controllers, microprocessors, and another electronic unit for implementing the functions of the present application, or their combinations.

For implementation with software, the technologies in the embodiments of the present application may be implemented through modules (for example, procedures or functions) that perform the functions in the embodiments of the present application. The software code may be stored in a memory and executed by a processor. The memory may be implemented in or outside the processor.

The terminal device 500 can implement each process implemented by the terminal device in the foregoing embodiments, and the same or equivalent technical effect can be achieved. To avoid repetition, details are not described herein again.

Referring to FIG. 6, FIG. 6 is a structural diagram of a network device to which an embodiment of the present application is applied. The network device can implement details of the embodiment of the method 200, and achieve a same effect. As shown in FIG. 6, a network device 600 includes a processor 601, a transceiver 602, a memory 603, and a bus interface.

In this embodiment of the present application, the network device 600 further includes: a computer program stored in the memory 603 and executable on the processor 601. When the computer program is executed by the processor 601, the steps of the method 200 are implemented.

In FIG. 6, a bus architecture may include any quantity of interconnected buses and bridges, and is specifically linked by various circuits of one or more processors represented by the processor 601 and a memory represented by the memory 603. The bus architecture may further link various other circuits such as a peripheral device, a voltage regulator, and a power management circuit together. These are all well-known in the art, and therefore are not further described in this specification. The bus interface provides interfaces. The transceiver 602 may be a plurality of elements, in other words, includes a transmitter and a receiver, and provides a unit configured to communicate with various other apparatuses on a transmission medium.

The processor 601 is responsible for managing the bus architecture and common processing, and the memory 603 may store data used when the processor 601 performs an operation.

The embodiments of the present application further provide a computer-readable storage medium. The computer-readable storage medium stores a computer program, and when the computer program is executed by a processor, the processes of the embodiments of the foregoing methods 100 and 200 are implemented and the same technical effect can be achieved. To avoid repetition, details are not described herein again. The computer readable storage medium is, for example, a read-only memory (ROM for short), a random access memory (RAM for short), a magnetic disk, or an optical disc.

It should be noted that, in this specification, the terms "include", "comprise", or any of their variants are intended to cover a non-exclusive inclusion, such that a process, a method, an article, or an apparatus that includes a list of elements not only includes those elements but also includes other elements that are not expressly listed, or further includes elements inherent to such process, method, article, or apparatus. Without more restrictions, an element defined by the statement "including a..." does not exclude another same element in this process, method, article, or apparatus that includes the element.

By means of the foregoing description of the embodiments, a person skilled in the art may clearly understand that the method in the foregoing embodiments may be implemented by software in addition to a necessary universal hardware platform. Certainly, the method in the foregoing embodiments may also be implemented by hardware. However, in many cases, the former is a preferred embodiment. Based on such an understanding, the technical solutions of the present application essentially, or the part contributing to the prior art may be implemented in a form of a software product. The computer software product is stored in a storage medium (for example, a ROM/RAM, a magnetic disk, or a compact disc), and includes a plurality of instructions for instructing a terminal (which may be a mobile phone, a computer, a server, an air conditioner, a network device, or the like) to perform the method described in the embodiments of the present application.

## Claims

1. A cell handover method, performed by a terminal device and comprising:
handing (S102) over to a target cell or a target transmission and reception point, TRP, based on at least one of the following configured by a network device for the terminal device:
a first control resource set, CORESET, being associated with the target cell or the target TRP; and
related information of a first TRP pointing to the target cell or the target TRP; **characterized in that**
the first CORESET being associated with the target cell or the target TRP comprises at least one of:
target information of the first CORESET indicating the target cell or the target TRP;
the first CORESET indicating the target cell or the target TRP;
scrambling information used by the first CORESET indicating the target cell or the target TRP; and
related configuration information of a TRP associated with the first CORESET indicating the target cell or the target TRP;
wherein the first CORESET indicating the target cell or the target TRP further comprises:
configuration information of the first CORESET indicating a target network node identifier or target network node related information; wherein the target network node comprises the target cell or the target TRP;
and/or
the related configuration information of a TRP associated with the first CORESET indicating to the target cell or the target TRP comprises:
related configuration information of a TRP to which the first CORESET belongs indicating a target network node identifier or target network node related information; wherein the target network node comprises the target cell or the target TRP;
the related information of a first TRP pointing to the target cell comprises at least one of:
related configuration information of the first TRP comprising a target network node identifier or target network node related information; and
related information of a cell to which the first TRP belongs comprising a target network node identifier or target network node related information; wherein
the target network node comprises the target cell or the target TRP;
wherein the related configuration information of the first TRP further comprises at least one of following and/or configuration information associated with at least one of the following:
physical downlink control channel, PDCCH, configuration information; and
a resource pool index of a control resource set;
and/or
the related information of a cell comprises at least one of following and/or configuration information associated with at least one of the following:
cell group configuration information;
special cell configuration information;
synchronous reconfiguration information;
serving cell configuration information; and
serving cell common configuration information.

2. The method according to claim 1, wherein the target information comprises at least one of following of the first CORESET:
a TCI;
quasi co-location, QCL, information in a TCI;
an RS comprised in a TCI;
QCL information of an RS comprised in a TCI; and
an RS associated with QCL information of an RS comprised in a TCI; and
the target information indicating the target cell or the target TRP comprises at least one of:
configuration information of the target information comprising a network node identifier or network node related information of the target cell;
configuration information of the target information comprising a network node identifier or network node related information of the target TRP; and
configuration information of the target information comprising target signaling or a target information element, and the target signaling or the target information element indicating the target cell or the target TRP.

3. The method according to claim 1, wherein at least one of the following is further configured by the network device for the terminal device:
a first reference signal, RS, pointing to the target cell or the target TRP;
a first transmission configuration indication, TCI, pointing to the target cell or the target TRP;
first spatial relation information pointing to the target cell or the target TRP; and
a first random access channel, RACH, resource pointing to the target cell or the target TRP.

4. The method according to claim 3, wherein the first RS pointing to the target cell or the target TRP comprises: configuration information of at least one of following comprising a target network node identifier or target network node related information:
the first RS;
quasi co-location, QCL, information of the first RS; and
an RS associated with QCL information of the first RS;
wherein the target network node comprises the target cell or the target TRP.

5. The method according to claim 3, wherein the first TCI pointing to the target cell or the target TRP comprises: configuration information of at least one of following comprising a target network node identifier or target network node related information:
the first TCI;
quasi co-location, QCL, information in the first TCI;
an RS comprised in the first TCI;
QCL information of an RS comprised in the first TCI; and
an RS associated with QCL information of an RS comprised in the first TCI;
wherein the target network node comprises the target cell or the target TRP.

6. The method according to claim 3, wherein the first spatial relation information pointing to the target cell or the target TRP comprises: configuration information of at least one of following comprising a target network node identifier or target network node related information:
the first spatial relation information;
an RS in the first spatial relation information;
quasi co-location, QCL, information of an RS in the first spatial relation information; and
an RS associated with QCL information of an RS in the first spatial relation information;
wherein the target network node comprises the target cell or the target TRP.

7. The method according to claim 3, wherein the first RACH resource pointing to the target cell or the target TRP comprises: at least one of following and/or configuration information of at least one of the following comprising a target network node identifier or target network node related information:
a synchronization signal block, SSB, associated with the first RACH resource;
quasi co-location, QCL, information of an SSB associated with the first RACH resource; and
an RS associated with QCL information of an SSB associated with the first RACH resource;
wherein the target network node comprises the target cell or the target TRP.

8. The method according to claim 1, wherein the handing (S102) over to a target cell or a target TRP comprises at least one of:
an anchor node being handed over to the target cell;
an anchor node remaining unchanged and in a case that there are multiple TRPs, a cell associated with a TRP of a non-anchor node being handed over;
configuration information of the target cell being used;
CORESET#0 belonging to the target cell;
a physical downlink control channel, PDCCH, belonging to the target cell;
a special cell being handed over to the target cell; and
a network node identifier or network node related information associated with a resource pool index of a control resource set being changed; wherein
the configuration information of the target cell comprises at least one of:
cell group configuration; special cell configuration; reconfiguration with synchronization; serving cell common configuration; serving cell configuration; a TCI; quasi co-location, QCL, information; a path loss reference reference signal; a RACH resource; and scrambling information.

9. A cell handover method, performed by a network device and comprising:
instructing (S202) a terminal device to hand over to a target cell or a target transmission and reception point, TRP, by configuring for the terminal device at least one of:
a first control resource set, CORESET, being associated with the target cell or the target TRP; and
related information of a first TRP pointing to the target cell or the target TRP; **characterized in that**
the first CORESET being associated with the target cell or the target TRP comprises at least one of:
target information of the first CORESET indicating the target cell or the target TRP;
the first CORESET indicating the target cell or the target TRP;
scrambling information used by the first CORESET indicating the target cell or the target TRP; and
related configuration information of a TRP associated with the first CORESET indicating the target cell or the target TRP;
wherein the first CORESET indicating the target cell or the target TRP further comprises:
configuration information of the first CORESET indicating a target network node identifier or target network node related information; wherein the target network node comprises the target cell or the target TRP;
and/or
the related configuration information of a TRP associated with the first CORESET indicating to the target cell or the target TRP further comprises:
related configuration information of a TRP to which the first CORESET belongs indicating a target network node identifier or target network node related information; wherein the target network node comprises the target cell or the target TRP;
the related information of a first TRP pointing to the target cell comprises at least one of:
related configuration information of the first TRP comprising a target network node identifier or target network node related information; and
related information of a cell to which the first TRP belongs comprising a target network node identifier or target network node related information; wherein
the target network node comprises the target cell or the target TRP;
wherein the related configuration information of the first TRP further comprises at least one of following and/or configuration information associated with at least one of the following:
physical downlink control channel, PDCCH, configuration information; and
a resource pool index of a control resource set;
and/or
the related information of a cell comprises at least one of following and/or configuration information associated with at least one of the following:
cell group configuration information;
special cell configuration information;
synchronous reconfiguration information;
serving cell configuration information; and
serving cell common configuration information.

10. The method according to claim 9, wherein at least one of the following is further configured by the network device for the terminal device:
a first reference signal, RS, pointing to the target cell or the target TRP;
a first transmission configuration indication, TCI, pointing to the target cell or the target TRP;
first spatial relation information pointing to the target cell or the target TRP; and
a first random access channel, RACH, resource pointing to the target cell or the target TRP.

11. A terminal device (300), comprising:
a cell handover module (302), configured to hand over to a target cell or a target transmission and reception point, TRP, based on at least one of the following configured by a network device for the terminal device:
a first control resource set, CORESET, being associated with the target cell or the target TRP; and
related information of a first TRP pointing to the target cell or the target TRP; **characterized in that**
the first CORESET being associated with the target cell or the target TRP comprises at least one of:
target information of the first CORESET indicating the target cell or the target TRP;
the first CORESET indicating the target cell or the target TRP;
scrambling information used by the first CORESET indicating the target cell or the target TRP; and
related configuration information of a TRP associated with the first CORESET indicating the target cell or the target TRP;
wherein the first CORESET indicating the target cell or the target TRP further comprises:
configuration information of the first CORESET indicating a target network node identifier or target network node related information; wherein the target network node comprises the target cell or the target TRP;
and/or
the related configuration information of a TRP associated with the first CORESET indicating to the target cell or the target TRP comprises:
related configuration information of a TRP to which the first CORESET belongs indicating a target network node identifier or target network node related information; wherein the target network node comprises the target cell or the target TRP;
the related information of a first TRP pointing to the target cell further comprises at least one of related configuration information of the first TRP comprising a target network node identifier or target network node related information; and
related information of a cell to which the first TRP belongs comprising a target network node identifier or target network node related information; wherein
the target network node comprises the target cell or the target TRP;
wherein the related configuration information of the first TRP further comprises at least one of following and/or configuration information associated with at least one of the following:
physical downlink control channel, PDCCH, configuration information; and
a resource pool index of a control resource set;
and/or
the related information of a cell comprises at least one of following and/or configuration information associated with at least one of the following:
cell group configuration information;
special cell configuration information;
synchronous reconfiguration information;
serving cell configuration information; and
serving cell common configuration information.

12. The terminal device (300) according to claim 11, wherein at least one of the following is further configured by the network device (400) for the terminal device (300):
a first reference signal, RS, pointing to the target cell or the target TRP;
a first transmission configuration indication, TCI, pointing to the target cell or the target TRP;
first spatial relation information pointing to the target cell or the target TRP; and
a first random access channel, RACH, resource pointing to the target cell or the target TRP.

13. A network device (400), comprising:
a configuration module (402), configured to instruct a terminal device (300) to hand over to a target cell or a target transmission and reception point, TRP, by configuring for the terminal device (300) at least one of:
a first control resource set, CORESET, being associated with the target cell or the target TRP; and
related information of a first TRP pointing to the target cell or the target TRP; **characterized in that**
the first CORESET being associated with the target cell or the target TRP comprises at least one of:
target information of the first CORESET indicating the target cell or the target TRP;
the first CORESET indicating the target cell or the target TRP;
scrambling information used by the first CORESET indicating the target cell or the target TRP; and
related configuration information of a TRP associated with the first CORESET indicating the target cell or the target TRP;
wherein the first CORESET indicating the target cell or the target TRP further comprises:
configuration information of the first CORESET indicating a target network node identifier or target network node related information; wherein the target network node comprises the target cell or the target TRP;
and/or
the related configuration information of a TRP associated with the first CORESET indicating to the target cell or the target TRP further comprises:
related configuration information of a TRP to which the first CORESET belongs indicating a target network node identifier or target network node related information;
wherein the target network node comprises the target cell or the target TRP;
the related information of a first TRP pointing to the target cell comprises at least one of:
related configuration information of the first TRP comprising a target network node identifier or target network node related information; and
related information of a cell to which the first TRP belongs comprising a target network node identifier or target network node related information; wherein
the target network node comprises the target cell or the target TRP;
wherein the related configuration information of the first TRP further comprises at least one of following and/or configuration information associated with at least one of the following:
physical downlink control channel, PDCCH, configuration information; and
a resource pool index of a control resource set;
and/or
the related information of a cell comprises at least one of following and/or configuration information associated with at least one of the following:
cell group configuration information;
special cell configuration information;
synchronous reconfiguration information;
serving cell configuration information; and
serving cell common configuration information.

14. The network device (400) according to claim 13, wherein at least one of the following is further configured by the network device (400) for the terminal device (300):
a first reference signal, RS, pointing to the target cell or the target TRP;
a first transmission configuration indication, TCI, pointing to the target cell or the target TRP;
first spatial relation information pointing to the target cell or the target TRP; and
a first random access channel, RACH, resource pointing to the target cell or the target TRP.

15. A computer-readable storage medium, **characterized in that** the computer-readable storage medium stores a computer program, and when the computer program is executed by a processor (501, 601) associated with a terminal device or a network device, the steps of the cell handover method according to any one of claims 1 to 8 are implemented by the terminal device or the steps of the cell handover method according to any one of claims 9 to 10 are implemented by the network device.

## Patentansprüche

1. Zellübergabeverfahren, das durch ein Endgerät durchgeführt wird und umfassend:
Übergeben (S102) an eine Zielzelle oder einen Zielübertragungs- und - empfangspunkt, TRP, basierend auf zumindest einem der folgenden, das durch ein Netzwerkteil für das Endgerät konfiguriert ist:
einem ersten Steuerressourcensatz ,CORESET, der der Zielzelle oder dem Ziel TRP zugeordnet ist; und
zugehörigen Informationen eines ersten TRP, der die Zielzelle oder den Ziel TRP anzeigt; **dadurch gekennzeichnet, dass**
der erste CORESET, der mit der Zielzelle oder dem Ziel TRP zugeordnet ist, mindestens eines der folgenden umfasst:
Zielinformationen des ersten CORESET, die die Zielzelle oder den Ziel TRP anzeigen;
den ersten CORESET, der die Zielzelle oder den Ziel TRP anzeigt;
Verschlüsselungsinformationen, die durch den ersten CORESET verwendet werden und die Zielzelle oder den Ziel-TRP anzeigen; und
zugehörige Konfigurationsinformationen eines TRP, der mit dem ersten CORESET zugeordnet ist, die die Zielzelle oder den Ziel TRP anzeigen;
wobei der erste CORESET, der die Zielzelle oder den Ziel TRP anzeigt, fernere umfasst:
Konfigurationsinformationen des ersten CORESET, die eine Zielnetzwerkknotenkennung oder Zielnetzwerkknotenbezogene Informationen anzeigen; wobei der Zielnetzwerkknoten die Zielzelle oder den Ziel-TRP umfasst;
und/oder
die zugehörigen Konfigurationsinformationen eines TRP, zu dem der erste CORESET gehört, die die Zielzelle oder den Ziel TRP anzeigenhinweisen, umfassen:
zugehörige Konfigurationsinformationen eines TRP, zu dem der erste CORESET gehört, die eine Zielnetzwerkknotenkennung oder zielnetzwerkknotenbezogene Informationen anzeigen; wobei der Zielnetzwerkknoten die Zielzelle oder den Ziel TRP umfasst;
die zugehörigen Informationen eines ersten TRP, der die Zielzelle anzeigt, mindestens eines der folgenden umfassen: zugehörige Konfigurationsinformationen des ersten TRP umfassend eine Zielnetzwerkknotenkennung oder zielnetzwerkknotenbezogene Informationen; und
zugehörige Informationen einer Zelle, zu der der erste TRP gehört, umfassend eine Zielnetzwerkknotenkennung oder zielnetzwerkknotenbezogene Informationen; wobei
der Zielnetzwerkknoten die Zielzelle oder den Ziel TRP umfasst;
wobei die zugehörigen Konfigurationsinformationen des ersten TRP ferner
mindestens eines der folgenden und/oder Konfigurationsinformationen, die mindestens einem der folgenden zugeordnet sind, umfassen:
Konfigurationsinformationen eines physikalischen Downlink-Steuerkanals PDCCH; und
einen Ressourcenpoolindex eines Steuerressourcensatzes;
und/oder
die zugehörigen Informationen einer Zelle umfassen mindestens eines der folgenden und/oder Konfigurationsinformationen, die mindestens einem der folgenden zugeordnet sind:
Zellgruppenkonfigurationsinformationen;
Spezialzellkonfigurationsinformationen;
synchronisierte Rekonfigurationsinformationen;
Servingszellenkonfigurationsinformationen; und
allgemeine Servingszellenkonfigurationsinformationen.

2. Verfahren nach Anspruch 1, wobei die Zielinformationen mindestens eines der folgenden des ersten CORESET umfassen:
eine TCI;
quasi-positionsbezogene, QCL, Informationen in einer TCI;
ein RS, das in einer TCI enthalten ist;
QCL-Informationen eines RS, das in einer TCI enthalten ist; und
ein RS, das QCL-Informationen eines RS, das in einer TCI enthaltene ist, zugeordnet ist; und
die Zielinformationen, die die Zielzelle oder den Ziel TRP anzeigen mindestens eines der folgenden umfassen:
Konfigurationsinformationen der Zielinformationen umfassend eine Netzwerkknotenkennung oder netzwerkknotenbezogene Informationen der Zielzelle;
Konfigurationsinformationen der Zielinformationen umfassend eine Netzwerkknotenkennung oder netzwerkknotenbezogene Informationen des Ziel TRP; und
Konfigurationsinformationen der Zielinformationen umfassend Zielsignalisierung oder ein Zielinformations-Element, wobei die Zielsignalisierung oder das Zielinformations-Element die Zielzelle oder den Ziel TRP anzeigt.

3. Verfahren nach Anspruch 1, wobei mindestens eines der folgenden ferner durch die Netzwerkvorrichtung für das Endgerät konfiguriert ist:
ein erstes Referenzsignal, RS, das die Zielzelle oder den Ziel-TRP anzeigt;
eine erste Übertragungskonfigurationsanzeige, TCI, die die Zielzelle oder den Ziel TRP anzeigt;
erste Raumbeziehungsinformationen, die die Zielzelle oder den Ziel TRP anzeigen; und
eine erste Zufallszugriffskanal, RACH, Ressource, die die Zielzelle oder den Ziel TRP anzeigt.

4. Verfahren nach Anspruch 3, wobei das erste RS, das die Zielzelle oder den Ziel-TRP anzeigt, umfasst: Konfigurationsinformationen von mindestens einem der folgenden, umfassend eine Zielnetzwerkknotenkennung oder zielnetzwerkknotenbezogene Informationen:
das erste RS;
quasi-positionsbezogene, QCL, Informationen des ersten RS; und
ein RS, das QCL-Informationen des ersten RS zugeordnet ist;
wobei der Zielnetzwerkknoten die Zielzelle oder den Ziel-TRP umfasst.

5. Verfahren nach Anspruch 3, wobei die erste TCI, die die Zielzelle oder den Ziel TRP anzeigt, umfasst: Konfigurationsinformationen von mindestens einem der folgenden umfassend eine Zielnetzwerkknotenkennung oder zielnetzwerkknotenbezogene Informationen:
die erste TCI;
quasi positionsbezogene,QCL, Informationen in der ersten TCI;
ein RS, das in der ersten TCI enthalten ist;
QCL-Informationen eines RS, das in der ersten TCI enthalten ist; und
ein RS, das QCL-Informationen eines RS, das in der ersten TCI enthalten ist, zugeordnet ist;
wobei der Zielnetzwerkknoten die Zielzelle oder den Ziel-TRP umfasst.

6. Verfahren nach Anspruch 3, wobei die ersten Raumbeziehungsinformationen, die die Zielzelle oder den Ziel TRP anzeigen, umfassen: Konfigurationsinformationen von mindestens einem der folgenden umfassend eine Zielnetzwerkknotenkennung oder zielnetzwerkknotenbezogene Informationen:
die ersten Raumbeziehungsinformationen;
ein RS in den ersten Raumbeziehungsinformationen;
quasi positionsbezogene, QCL, Informationen eines RS in den ersten Raumbeziehungsinformationen, und
ein RS, das QCL-Informationen eines RS in den ersten Raumbeziehungsinformationen zugeordnet ist;
wobei der Zielnetzwerkknoten die Zielzelle oder den Ziel-TRP umfasst.

7. Verfahren nach Anspruch 3, wobei die erste RACH-Ressource, die die Zielzelle oder den Ziel TRP anzeigt , umfasst: mindestens eines der folgenden und/oder Konfigurationsinformationen von mindestens einem der folgenden umfassend eine Zielnetzwerkknotenkennung oder zielnetzwerkknotenbezogene Informationen:
ein Synchronisierungssignalblock, SSB; das der ersten RACH-Ressource zugeordnet ist;
quasi positionsbezogene, QCL, Informationen eines SSB, der der ersten RACH-Ressource zugeordnet ist; und
ein RS, das QCL-Informationen eines SSB, der ersten RACH-Ressource zugeordnet ist, zugeordnet ist;
wobei der Zielnetzwerkknoten die Zielzelle oder den Ziel-TRP umfasst.

8. Verfahren nach Anspruch 1, wobei das Übergeben (S102) an eine Zielzelle oder einen Ziel TRP mindestens eines der folgenden umfasst:
ein Ankerknoten, der an die Zielzelle übergeben wird;
ein Ankerknoten, der unverändert bleibt, und im Falle mehrerer TRP vorhanden sind, eine Zelle, die einem TRP eines Nicht-Ankerknotens zugeordnet ist, übergeben wird;
Konfigurationsinformationen der Zielzelle, die verwendet wird;
CORESET#0,der zu der Zielzelle gehört;
ein physikalischer Downlink-Steuerkanal, PDCCH, das zu der Zielzelle gehört;
eine Spezialzelle, die an die Zielzelle übergeben wird; und
ein Netzwerkknotenkennung oder netzwerkbezogenen Informationen, die einem Ressourcenpoolindex eines Steuerressourcensatzes zugeordnet sind, werden geändert;
wobei die Konfigurationsinformationen der Zielzelle mindestens eines der folgenden umfassen:
Zellgruppenkonfiguration; Spezialzellkonfiguration; Rekonfiguration mit Synchronisation; allgemeine Servingszellenkonfiguration; Servingszellenkonfiguration; eine TCI; quasi positionsbezogene, QCL, Informationen; ein Pfadverlust-Referenzsignal; eine RACH-Ressource; und Verschlüsselungsinformationen.

9. Zellübergabeverfahren, das durch eine Netzwerkvorrichtung durchgeführt wird und umfassend:
Anweisen (S202) eines Endgeräts, an eine Zielzelle oder einen Zielübertragungsund -empfangspunkt (TRP) durch Konfiguration für das Endgerät von mindestens einem der folgenden:
ein erster Steuerressourcensatz, CORESET, der der Zielzelle oder dem Ziel TRP zugeordnet ist; und
zugehörige Informationen eines ersten TRP, die die Zielzelle oder den Ziel TRP anzeigen; zu übergeben, **dadurch gekennzeichnet, dass**
der erste CORESET, der der Zielzelle oder dem Ziel-TRP zugeordnet ist, mindestens eines der folgenden umfasst:
Zielinformationen des ersten CORESET, die die Zielzelle oder den Ziel TRP anzeigen;
der erste CORESET, der die Zielzelle oder den Ziel TRP anzeigt;
Verschlüsselungsinformationen, die von dem ersten CORESET verwendet werden und die Zielzelle oder den Ziel TRP anzeigen; und
zugehörige Konfigurationsinformationen eines TRP, der dem ersten CORESET zugeordnet ist, die die Zielzelle oder den Ziel TRP anzeigen;
wobei der erste CORESET, der die Zielzelle oder den Ziel TRP anzeigt, ferner umfasst
Konfigurationsinformationen des ersten CORESET, die eine Zielnetzwerkknotenkennung oder zielnetzwerkknotenbezogene Informationen anzeigen; wobei der Zielnetzwerkknoten die Zielzelle oder den Ziel TRP umfasst;
und/oder
die zugehörigen Konfigurationsinformationen eines TRP, der dem ersten CORESET zugeordnet ist, die die Zielzelle oder den Ziel TRP anzeigen, ferner umfassen:
zugehörige Konfigurationsinformationen eines TRP, zu dem der erste CORESET gehört, die eine Zielnetzwerkknotenkennung oder zielnetzwerkknotenbezogene Informationen anzeigen; wobei der Zielnetzwerkknoten die Zielzelle oder den Ziel TRP umfasst;
die zugehörigen Informationen eines ersten TRP, der die Zielzelle anzeigen, mindestens eines der folgenden umfassen:
zugehörige Konfigurationsinformationen des ersten TRP, die einen Zielnetzwerkknotenbezeichner oder zielnetzwerkknotenbezogene Informationen umfassen; und
zugehörige Informationen einer Zelle, zu der der erste TRP gehört, die eine Zielnetzwerkknotenkennung oder zielnetzwerkknotenbezogene Informationen umfassen; wobei
der Zielnetzwerkknoten die Zielzelle oder den Ziel TRP umfasst;
wobei die zugehörigen Konfigurationsinformationen des erste TRP ferner umfassen mindestens eines der folgenden und/oder Konfigurationsinformationen, die mindestens einem der folgenden zugeordnet sind:
Konfigurationsinformationen eines physikalischen Downlink-Steuerkanals, PDCCH; und
einen Ressourcenpoolindex eines Steuerressourcensatzes; und/oder
die zugehörigen Informationen einer Zelle mindestens eines der folgenden und/oder Konfigurationsinformationen, die mindestens einem der folgenden zugeordnet sind, umfassen:
Zellgruppenkonfigurationsinformationen;
Spezialzellkonfigurationsinformationen;
synchronisierte Rekonfigurationsinformationen;
Servingszellenkonfigurationsinformationen; und
allgemeine Servingszellenkonfigurationsinformationen.

10. Verfahren nach Anspruch 9, wobei mindestens eines der folgenden ferner durch die Netzwerkvorrichtung für das Endgerät konfiguriert ist:
ein erstes Referenzsignal, RS, das die Zielzelle oder den Ziel TRP anzeigt;
eine erste Übertragungskonfigurationsanzeige (TCI), die die Zielzelle oder den Ziel TRP anzeigt;
erste Raumbeziehungsinformationen, die die Zielzelle oder den Ziel TRP anzeigen; und
eine erste Zufallszugriffskanal, RACH, Ressource, die die Zielzelle oder den Ziel TRP anzeigt.

11. Endgerät (300) umfassend:
ein Zellübergabemodul (302), das dazu konfiguriert ist, an eine Zielzelle oder einen Zielübertragungs- und -empfangspunkt, TRP, basierend auf mindestens einem der folgenden, das durch eine Netzwerkvorrichtung für das Endgerät konfiguriert ist:
ein erster Steuerressourcensatz, CORESET, der der Zielzelle oder dem Ziel TRP zugeordnet ist; und
zugehörige Informationen eines ersten TRP, die die Zielzelle oder den Ziel TRP anzeigen, zu übergeben; **dadurch gekennzeichnet, dass**
der erste CORESET, der der Zielzelle oder dem Ziel-TRP zugeordnet ist, mindestens eines der folgenden:
Zielinformationen des ersten CORESET, die die Zielzelle oder den Ziel TRP anzeigen;
der erste CORESET, der die Zielzelle oder den Ziel TRP anzeigt;
Verschlüsselungsinformationen, die durch den ersten CORESET verwendet werden und die Zielzelle oder den Ziel TRP anzeigen; und
zugehörige Konfigurationsinformationen eines TRP, der dem ersten CORESET zugeordnet ist, die die Zielzelle oder den Ziel-TRP anzeigen;
wobei der erste CORESET, der die Zielzelle oder den Ziel-TRP anzeigt, ferner umfasst:
Konfigurationsinformationen des ersten CORESET, die eine Zielnetzwerkknotenkennung oder zielnetzwerkknotenbezogene Informationen anzeigen; wobei der Zielnetzwerkknoten die Zielzelle oder den Ziel-TRP umfasst;
und/oder
die zugehörigen Konfigurationsinformationen eines TRP, der dem ersten CORESET zugeordnet ist, die die Zielzelle oder den Ziel TRP anzeigen, umfassen:
zugehörige Konfigurationsinformationen eines TRP, zu dem der erste CORESET gehört, die eine Zielnetzwerkknotenkennung oder zielnetzwerkknotenbezogene Informationen anzeigen; wobei der Zielnetzwerkknoten die Zielzelle oder den Ziel-TRP umfasst;
die zugehörigen Informationen eines ersten TRP, die die Zielzelle anzeigen, ferner mindestens eines der folgenden umfassen:
zugehörige Konfigurationsinformationen des ersten TRP umfassend einen Zielnetzwerkknotenkennung oder zielnetzwerkknotenbezogene Informationen; und
zugehörige Informationen einer Zelle, zu der der erste TRP gehört, umfassend eine Zielnetzwerkknotenkennung oder zielnetzwerkknotenbezogene Informationen; wobei
der Zielnetzwerkknoten die Zielzelle oder den Ziel TRP umfasst;
wobei die zugehörigen Konfigurationsinformationen des ersten TRP ferner umfassen:
mindestens eines der folgenden und/oder Konfigurationsinformationen, die mindestens einem der folgenden zugeordnet sind:
physikalischer Downlink-Steuerkanal, PDCCH, Konfigurationsinformationen; und
einen Ressourcenpoolindex eines Steuerressourcensatzes;
und/oder
die zugehörigen Informationen einer Zelle mindestens eines der folgenden und/oder Konfigurationsinformationen, die mindestens einem der folgenden zugeordnet sind, umfassen:
Zellgruppenkonfigurationsinformationen;
Spezialzellkonfigurationsinformationen;
synchronisierte Rekonfigurationsinformationen;
Servingszellenkonfigurationsinformationen; und
allgemeine Servingszellenkonfigurationsinformationen.

12. Endgerät (300) nach Anspruch 11, wobei mindestens eines der folgenden ferner durch die Netzwerkvorrichtung (400) für das Endgerät (300) konfiguriert ist:
ein erstes RS, das die Zielzelle oder den Ziel TRP anzeigt;
eine erste Übertragungskonfigurationsanzeige, TCI, die die Zielzelle oder den Ziel TRP anzeigt;
erste Raumbeziehungsinformationen, die die Zielzelle oder den Ziel TRP anzeigen; und
eine erste RACH-Ressource, die die Zielzelle oder den Ziel TRP anzeigt.

13. Netzwerkvorrichtung (400), umfassend:
ein Konfigurationsmodul (402), das dazu konfiguriert ist, ein Endgerät (300) anzuweisen, an eine Zielzelle oder einen Zielübertragungs- und -empfangspunkt (TRP), durch Konfigurieren für das Endgerät (300) von mindestens einem der folgenden:
ein erster Steuerressourcensatz, CORESET, der der Zielzelle oder dem Ziel TRP zugeordnet ist; und
zugehörige Informationen eines ersten TRP, die die Zielzelle oder den Ziel TRP anzeigen; **dadurch gekennzeichnet, dass**
der erste CORESET, der der Zielzelle oder dem Ziel TRP zugeordnet ist, mindestens eines der folgenden umfasst:
Zielinformationen des ersten CORESET, die die Zielzelle oder den Ziel TRP anzeigen;
der erste CORESET, der die Zielzelle oder den Ziel TRP anzeigt;
Verschlüsselungsinformationen, die durch den ersten CORESET verwendet werden und die Zielzelle oder den Ziel TRP anzeigen; und
zugehörige Konfigurationsinformationen eines TRP, der dem ersten CORESET zugeordnet ist, die die Zielzelle oder den Ziel TRP anzeigen;
wobei der erste CORESET, der die Zielzelle oder den Ziel TRP anzeigt, ferner umfasst:
Konfigurationsinformationen des ersten CORESET, die eine Zielnetzwerkknotenkennung oder zielnetzwerkknotenbezogene Informationen anzeigen; wobei der Zielnetzwerkknoten die Zielzelle oder den Ziel-TRP umfasst;
und/oder
die zugehörigen Konfigurationsinformationen eines TRP, der dem ersten CORESET zugeordnet ist, die die Zielzelle oder den Ziel TRP anzeigen, ferner umfassen:
zugehörige Konfigurationsinformationen eines TRP, zu dem der erste CORESET gehört, die eine Zielnetzwerkknotenkennung oder zielnetzwerkknotenbezogene Informationen anzeigen; wobei der Zielnetzwerkknoten die Zielzelle oder den Ziel-TRP umfasst;
die zugehörigen Informationen eines ersten TRP, die die Zielzelle anzeigen, mindestens eines der folgenden umfassen:
zugehörige Konfigurationsinformationen des ersten TRP, umfassend eine Zielnetzwerkknotenkennung oder zielnetzwerkknotenbezogene Informationen; und
zugehörige Informationen einer Zelle, zu der der erste TRP gehört, umfassend eine Zielnetzwerkknotenkennung oder zielnetzwerkknotenbezogene Informationen; wobei
der Zielnetzwerkknoten die Zielzelle oder den Ziel-TRP umfasst;
wobei die zugehörigen Konfigurationsinformationen des ersten TRP ferner umfassen: mindestens eines
der folgenden und/oder Konfigurationsinformationen, die mindestens einem der folgenden zugeordnet sind:
physikalischer Downlink-Steuerkanal, PDCCH, Konfigurationsinformationen, und
einen Ressourcenpoolindex eines Steuerressourcensatzes; und/oder
die zugehörigen Informationen einer Zelle mindestens eines der folgenden und/oder Konfigurationsinformationen umfassen, die mindestens einem der folgenden zugeordnet sind:
Zellgruppenkonfigurationsinformationen;
Spezialzellkonfigurationsinformationen;
synchronisierte Rekonfigurationsinformationen;
Servingszellenkonfigurationsinformationen; und
allgemeine Servingszellenkonfigurationsinformationen.

14. Netzwerkvorrichtung (400) nach Anspruch 13, wobei mindestens eines der folgenden ferner durch die Netzwerkvorrichtung (400) für das Endgerät (300) konfiguriert ist:
ein erstes RS, das die Zielzelle oder den Ziel TRP anzeigt;
eine erste Übertragungskonfigurationsanzeige, TCI, die die Zielzelle oder den Ziel TRP anzeigt;
erste Raumbeziehungsinformationen, die die Zielzelle oder den Ziel TRP anzeigen; und
eine erste RACH-Ressource, die die Zielzelle oder den Ziel TRP anzeigt.

15. Computerlesbares Speichermedium, **dadurch gekennzeichnet, dass** das computerlesbare Speichermedium ein Computerprogramm speichert und, wenn das Computerprogramm durch einen Prozessor (501, 601), der einem Endgerät oder einem Netzwerkteil zugeordnet ist, ausgeführt wird, die Schritte des Zellübergabeverfahrens nach einem der Ansprüche 1 bis 8 durch das Endgerät oder die Schritte des Zellübergabeverfahrens nach einem der Ansprüche 9 bis 10 durch die Netzwerkvorrichtung implementiert werden.

## Revendications

1. Procédé de transfert intercellulaire, mis en œuvre par un dispositif terminal et comprenant :
le transfert (S102) vers une cellule cible ou un point de transmission et de réception cible TRP, sur la base d'au moins l'un des éléments suivants configurés par un dispositif de réseau pour le dispositif terminal :
un premier ensemble de ressources de commande CORESET associé à la cellule cible ou au TRP cible ; et
des informations associées à un premier TRP pointant vers la cellule cible ou le TRP cible ; **caractérisé en ce que**
le premier CORESET associé à la cellule cible ou au TRP cible comprend au moins l'un des éléments suivants :
des informations cibles du premier CORESET indiquant la cellule cible ou le TRP cible ;
le premier CORESET indiquant la cellule cible ou le TRP cible ;
des informations de brouillage utilisées par le premier CORESET indiquant la cellule cible ou le TRP cible ; et
des informations de configuration associées à un TRP associé au premier CORESET indiquant la cellule cible ou le TRP cible ;
le premier CORESET indiquant la cellule cible ou le TRP cible comprenant en outre
des informations de configuration du premier CORESET indiquant un identifiant de nœud de réseau cible ou des informations associées au nœud de réseau cible ; le nœud de réseau cible comprenant la cellule cible ou le TRP cible ;
et/ou
les informations de configuration associées à un TRP associé au premier CORESET indiquant la cellule cible ou le TRP cible comprenant :
des informations de configuration associées à un TRP auquel appartient le premier CORESET, indiquant un identifiant de nœud de réseau cible ou des informations associées au nœud de réseau cible; le nœud de réseau cible comprenant la cellule cible ou le TRP cible ;
les informations associées à un premier TRP pointant vers la cellule cible comprenant au moins l'un des éléments suivants: des informations de configuration associées au premier TRP comprenant un identifiant de nœud de réseau cible ou des informations associées au nœud de réseau cible ; et
des informations associées à une cellule à laquelle appartient le premier TRP, comprenant un identifiant de nœud de réseau cible ou des informations associées au nœud de réseau cible ;
le nœud de réseau cible comprenant la cellule cible ou le TRP cible ;
les informations de configuration associées au premier TRP comprenant en outre au moins l'un des éléments suivants et/ou des informations de configuration associées à au moins l'un des éléments suivants :
des informations de configuration de canal de commande de liaison descendante physique, PDCCH ; et
un indice de pool de ressources d'un ensemble de ressources de commande ;
et/ou
les informations associées à une cellule comprenant au moins l'un des éléments suivants et/ou des informations de configuration associées à au moins l'un des éléments suivants :
des informations de configuration de groupe de cellules ;
des informations de configuration de cellule spéciale ;
des informations de reconfiguration synchronisée ;
des informations de configuration de cellule servante ; et
des informations de configuration commune de cellule servante.

2. Le procédé selon la revendication 1, dans lequel les informations cibles comprennent au moins l'un des éléments suivants du premier CORESET :
une indication de configuration de transmission, TCI ;
des informations de quasi-collocalisation, QCL, dans une TCI ;
un signal de référence, RS, compris dans une TCI ;
des informations QCL d'un RS compris dans une TCI ; et
un RS associé à des informations QCL d'un RS compris dans une TCI ; et
les informations cibles indiquant la cellule cible ou le TRP cible comprenant au moins l'un des éléments suivants : des informations de configuration des informations cibles comprenant un identifiant de nœud de réseau ou des informations associées au nœud de réseau de la cellule cible ;
des informations de configuration des informations cibles comprenant un identifiant de nœud de réseau ou des informations associées au nœud de réseau du TRP cible ; et
des informations de configuration des informations cibles comprenant une signalisation cible ou un élément d'information cible, ladite signalisation cible ou ledit élément d'information cible indiquant la cellule cible ou le TRP cible.

3. Le procédé selon la revendication 1, dans lequel au moins l'un des éléments suivants est en outre configuré par le dispositif de réseau pour le dispositif terminal :
un premier signal de référence, RS, pointant vers la cellule cible ou le TRP cible ;
une première indication de configuration de transmission, TCI, pointant vers la cellule cible ou le TRP cible ;
des premières informations de relation spatiale pointant vers la cellule cible ou le TRP cible ; et
une première ressource de canal d'accès aléatoire, RACH, pointant vers la cellule cible ou le TRP cible.

4. Le procédé selon la revendication 3, dans lequel le premier RS pointant vers la cellule cible ou le TRP cible comprend : des informations de configuration d'au moins l'un des éléments suivants, comprenant un identifiant de nœud de réseau cible ou des informations associées au nœud de réseau cible :
le premier RS ;
des informations de quasi-collocalisation , QCL, du premier RS ; et
un RS associé à des informations QCL du premier RS ;
le nœud de réseau cible comprenant la cellule cible ou le TRP cible.

5. Le procédé selon la revendication 3, dans lequel la première TCI pointant vers la cellule cible ou le TRP cible comprend : des informations de configuration d'au moins l'un des éléments suivants, comprenant un identifiant de nœud de réseau cible ou des informations associées au nœud de réseau cible :
la première TCI ;
des informations QCL dans la première TCI ;
un RS compris dans la première TCI ;
des informations QCL d'un RS compris dans la première TCI ; et
un RS associé à des informations QCL d'un RS compris dans la première TCI ;
où le nœud de réseau cible comprenant la cellule cible ou le TRP cible.

6. Le procédé selon la revendication 3, dans lequel les premières informations de relation spatiale pointant vers la cellule cible ou le TRP cible comprennent : des informations de configuration d'au moins l'un des éléments suivants, comprenant un identifiant de nœud de réseau cible ou des informations associées au nœud de réseau cible :
les premières informations de relation spatiale ;
un RS dans les premières informations de relation spatiale ;
des informations de quasi-colocalisation QCL, informations d'un RS dans les premières informations de relation spatiale ; et
un RS associé à des informations QCL d'un RS dans les premières informations de relation spatiale ;
le nœud de réseau cible comprenant la cellule cible ou le TRP cible.

7. Le procédé selon la revendication 3, dans lequel la première ressource RACH pointant vers la cellule cible ou le TRP cible comprend :
au moins l'un des éléments suivants et/ou des informations de configuration d'au moins l'un des éléments suivants, comprenant un identifiant de nœud de réseau cible ou des informations associées au nœud de réseau cible :
un bloc de signal de synchronisation, SSB, associé à la première ressource RACH ;
des informations de quasi-colocalisation QCL informations d'un SSB associé à la première ressource RACH ; et
un RS associé à des informations QCL d'un SSB associé à la première ressource RACH;
le nœud de réseau cible comprenant la cellule cible ou le TRP cible.

8. Le procédé selon la revendication 1, dans lequel le transfert (S102) vers une cellule cible ou un TRP cible comprend au moins l'un des éléments suivants :
un nœud d'ancrage est transféré vers la cellule cible ;
un nœud d'ancrage reste inchangé et, dans le cas de multiples TRP, une cellule associée à un TRP d'un nœud non ancrage est transférée ;
des informations de configuration de la cellule cible sont utilisées ;
CORESET#0 appartient à la cellule cible ;
un canal de commande de liaison descendante physique, PDCCH, appartient à la cellule cible;
une cellule spéciale est transférée vers la cellule cible ; et
un identifiant de nœud de réseau ou des informations associées à un indice de pool de ressources d'un ensemble de ressources de commande sont modifiés ;
les informations de configuration de la cellule cible comprenant au moins l'un des éléments suivants :
configuration de groupe de cellules ; configuration de cellule spéciale ; reconfiguration avec synchronisation ; configuration commune de cellule servante ; configuration de cellule servante ; une TCI ; des informations QCL ; un signal de référence de perte de trajet ; une ressource RACH ; et des informations de brouillage.

9. Procédé de transfert intercellulaire, mis en œuvre par un dispositif de réseau et comprenant :
instruire (S202) un dispositif terminal de transférer vers une cellule cible ou un TRP cible, en configurant pour le dispositif terminal au moins l'un des éléments suivants :
un premier CORESET associé à la cellule cible ou au TRP cible ; et
des informations associées à un premier TRP pointant vers la cellule cible ou le TRP cible ;
**caractérisé en ce que**
le premier CORESET associé à la cellule cible ou au TRP cible comprend au moins l'un des éléments suivants :
des informations cibles du premier CORESET indiquant la cellule cible ou le TRP cible ;
le premier CORESET indiquant la cellule cible ou le TRP cible ;
des informations de brouillage utilisées par le premier CORESET indiquant la cellule cible ou le TRP cible ; et
des informations de configuration associées à un TRP associé au premier CORESET indiquant la cellule cible ou le TRP cible ;
le premier CORESET indiquant la cellule cible ou le TRP cible comprenant en outre
des informations de configuration du premier CORESET indiquant un identifiant de nœud de réseau cible ou des informations associées à un nœud de réseau cible ; ledit nœud de réseau cible comprenant la cellule cible ou le TRP cible ;
et/ou
les informations de configuration associées à un TRP associé au premier CORESET indiquant la cellule cible ou le TRP cible comprenant en outre :
des informations de configuration associées à un TRP auquel appartient le premier CORESET, indiquant un identifiant de nœud de réseau cible ou des informations associées à un nœud de réseau cible ; ledit nœud de réseau cible comprenant la cellule cible ou le TRP cible ;
les informations associées à un premier TRP pointant vers la cellule cible comprenant au moins l'un des éléments suivants :
des informations de configuration du premier TRP comprenant un identifiant de nœud de réseau cible ou des informations associées ; et
des informations associées à une cellule à laquelle appartient le premier TRP, comprenant un identifiant de nœud de réseau cible ou des informations associées ;
le nœud de réseau cible comprenant la cellule cible ou le TRP cible ;
les informations de configuration associées au premier TRP comprenant en outre au moins l'un des éléments suivants et/ou des informations de configuration associées à au moins l'un des éléments suivants :
informations de configuration de canal de commande de liaison descendante physique, PDCCH; et
un indice de pool de ressources d'un CORESET ;
et/ou
les informations associées à une cellule comprenant au moins l'un des éléments suivants et/ou des informations de configuration associées à au moins l'un des éléments suivants :
informations de configuration de groupe de cellules ;
informations de configuration de cellule spéciale ;
informations de reconfiguration synchronisée ;
informations de configuration de cellule servante ; et
informations de configuration commune de cellule servante.

10. Le procédé selon la revendication 9, dans lequel au moins l'un des éléments suivants est en outre configuré par le dispositif de réseau pour le dispositif terminal :
un premier signal de référence RS pointant vers la cellule cible ou le TRP cible ;
une première indication de configuration de transmission TCI pointant vers la cellule cible ou le TRP cible ;
des premières informations de relation spatiale pointant vers la cellule cible ou le TRP cible ; et
une première ressource de canal d'accès aléatoire RACH pointant vers la cellule cible ou le TRP cible.

11. Un dispositif terminal (300), comprenant :
un module de transfert intercellulaire (302), configuré pour effectuer un transfert vers une cellule cible ou un point de transmission et de réception cible ,TRP, sur la base d'au moins l'un des éléments suivants configuré par un dispositif de réseau pour le dispositif terminal :
un premier ensemble de ressources de commande, CORESET, associé à la cellule cible ou au TRP cible ; et
des informations associées à un premier TRP pointant vers la cellule cible ou le TRP cible ; **caractérisé en ce que**
le premier CORESET associé à la cellule cible ou au TRP cible comprend au moins l'un des éléments suivants :
des informations cibles du premier CORESET indiquant la cellule cible ou le TRP cible ;
le premier CORESET indiquant la cellule cible ou le TRP cible ;
des informations de brouillage utilisées par le premier CORESET indiquant la cellule cible ou le TRP cible ; et
des informations de configuration associées à un TRP associé au premier CORESET indiquant la cellule cible ou le TRP cible ;
le premier CORESET indiquant la cellule cible ou le TRP cible comprenant en outre :
des informations de configuration du premier CORESET indiquant un identifiant de nœud de réseau cible ou des informations associées à un nœud de réseau cible ; ledit nœud de réseau cible comprenant la cellule cible ou le TRP cible ;
et/ou
les informations de configuration associées à un TRP associé au premier CORESET, indiquant la cellule cible ou le TRP cible, comprennent :
des informations de configuration associées à un TRP auquel appartient le premier CORESET, indiquant un identifiant de nœud de réseau cible ou des informations associées à un nœud de réseau cible ; ledit nœud de réseau cible comprenant la cellule cible ou le TRP cible ;
les informations associées à un premier TRP pointant vers la cellule cible comprenant en outre au moins l'un des éléments suivants :
des informations de configuration du premier TRP comprenant un identifiant de nœud de réseau cible ou des informations associées ; et
des informations associées à une cellule à laquelle appartient le premier TRP, comprenant un identifiant de nœud de réseau cible ou des informations associées ;
le nœud de réseau cible comprenant la cellule cible ou le TRP cible ;
les informations de configuration associées au premier TRP comprenant en outre au moins l'un des éléments suivants et/ou des informations de configuration associées à au moins l'un des éléments suivants :
des informations de configuration de canal de commande de liaison descendante physique PDCCH ; et
un indice de pool de ressources d'un ensemble de ressources de commande ;
et/ou
les informations associées à une cellule comprennent au moins l'un des éléments suivants et/ou des informations de configuration associées à au moins l'un des éléments suivants :
des informations de configuration de groupe de cellules ;
des informations de configuration de cellule spéciale ;
des informations de reconfiguration synchronisée ;
des informations de configuration de cellule servante ; et
des informations de configuration commune de cellule servante.

12. Le dispositif terminal (300) selon la revendication 11, dans lequel au moins l'un des éléments suivants est en outre configuré par le dispositif de réseau (400) pour le dispositif terminal (300) :
un premier signal de référence RS pointant vers la cellule cible ou le TRP cible ;
une première indication de configuration de tramission TCI pointant vers la cellule cible ou le TRP cible ;
des premières informations de relation spatiale pointant vers la cellule cible ou le TRP cible ; et
une première ressource de canal d'accès aléatoire RACH pointant vers la cellule cible ou le TRP cible.

13. Un dispositif de réseau (400), comprenant :
un module de configuration (402), configuré pour instruire un dispositif terminal (300) à effectuer un transfert vers une cellule cible ou un point de transmission et de réception cible (TRP), en configurant pour le dispositif terminal (300) au moins l'un des éléments suivants :
un premier ensemble de ressources de commande CORESET associé à la cellule cible ou au TRP cible ; et
des informations associées à un premier TRP pointant vers la cellule cible ou le TRP cible ; **caractérisé en ce que**
le premier CORESET associé à la cellule cible ou au TRP cible comprend au moins l'un des éléments suivants :
des informations cibles du premier CORESET indiquant la cellule cible ou le TRP cible ;
le premier CORESET indiquant la cellule cible ou le TRP cible ;
des informations de brouillage utilisées par le premier CORESET indiquant la cellule cible ou le TRP cible ; et
des informations de configuration associées à un TRP associé au premier CORESET indiquant la cellule cible ou le TRP cible ;
le premier CORESET indiquant la cellule cible ou le TRP cible comprenant en outre :
des informations de configuration du premier CORESET indiquant un identifiant de nœud de réseau cible ou des informations associées à un nœud de réseau cible ; ledit nœud de réseau cible comprenant la cellule cible ou le TRP cible ;
et/ou
les informations de configuration associées à un TRP associé au premier CORESET, indiquant la cellule cible ou le TRP cible, comprennent en outre :
des informations de configuration associées à un TRP auquel appartient le premier CORESET, indiquant un identifiant de nœud de réseau cible ou des informations associées à un nœud de réseau cible ; ledit nœud de réseau cible comprenant la cellule cible ou le TRP cible ;
les informations associées à un premier TRP pointant vers la cellule cible comprennent au moins l'un des éléments suivants :
des informations de configuration associées du premier TRP comprenant un identifiant de nœud de réseau cible ou des informations associées au nœud de réseau cible ; et
des informations associées à une cellule à laquelle appartient le premier TRP, comprenant un identifiant de nœud de réseau cible ou des informations associées au nœud de réseau cible ;
le nœud de réseau cible comprenant la cellule cible ou le TRP cible ;
les informations de configuration associées au premier TRP comprenant en outre au moins l'un des éléments suivants et/ou des informations de configuration associées à au moins l'un des éléments suivants :
des informations de configuration de canal de commande de liaison descendante physique PDCCH ; et
un indice de pool de ressources d'un ensemble de ressources de commande CORESET;
et/ou
les informations associées à une cellule comprennent au moins l'un des éléments suivants et/ou des informations de configuration associées à au moins l'un des éléments suivants :
des informations de configuration de groupe de cellules ;
des informations de configuration de cellule spéciale ;
des informations de reconfiguration synchronisée ;
des informations de configuration de cellule servante ; et
des informations de configuration commune de cellule servante.

14. Le dispositif de réseau (400) selon la revendication 13, dans lequel au moins l'un des éléments suivants est en outre configuré par le dispositif de réseau (400) pour le dispositif terminal (300) :
un premier signal de référence RS pointant vers la cellule cible ou le TRP cible ;
une première indication de configuration de transmission TCI pointant vers la cellule cible ou le TRP cible ;
des premières informations de relation spatiale pointant vers la cellule cible ou le TRP cible ; et
une première ressource de canal d'accès aléatoire RACH pointant vers la cellule cible ou le TRP cible.

15. Un support de stockage lisible par ordinateur, **caractérisé en ce que** le support de stockage lisible par ordinateur stocke un programme informatique, et lorsque le programme informatique est exécuté par un processeur (501, 601) associé à un dispositif terminal ou à un dispositif de réseau, les étapes du procédé de transfert intercellulaire selon l'une quelconque des revendications 1 à 8 sont mises en œuvre par le dispositif terminal ou les étapes du procédé de transfert intercellulaire selon l'une quelconque des revendications 9 à 10 sont mises en œuvre par le dispositif de réseau.
